Europäisches Patentamt

European Patent Office

Office européen des brevets

(19)

(11) EP 0 629 878 B1

(12) FASCICULE DE BREVET EUROPEEN

(45) Date de publication et mention
de la délivrance du brevet:
**10.09.1997 Bulletin 1997/37**

(51) Int Cl.⁶: **G01S 13/91**, G01S 13/93,
G01S 13/87, G08G 5/06

(21) Numéro de dépôt: **94401049.5**

(22) Date de dépôt: **10.05.1994**

(54) **Dispositif radar de surveillance au sol, notamment pour aéroport**

Bodenüberwachung-Radarsystem, insbesondere für Flughafen

Radar ground surveillance system, particularly for airport

(84) Etats contractants désignés:
**AT BE CH DE DK ES GB GR IE IT LI LU MC NL PT SE**

(30) Priorité: **14.06.1993 FR 9307149**

(43) Date de publication de la demande:
**21.12.1994 Bulletin 1994/51**

(73) Titulaire: **DASSAULT ELECTRONIQUE**
**F-92214 Saint-Cloud (FR)**

(72) Inventeurs:
• **CHAZELLE, Xavier**
**F-92210 Saint Cloud (FR)**
• **MAITRE, Bernard**
**F-78990 Elancourt (FR)**
• **AUGU, Bertrand**
**F-75015 Paris (FR)**

(74) Mandataire: **Plaçais, Jean-Yves et al**
**Cabinet Netter,**
**40, rue Vignon**
**75009 Paris (FR)**

(56) Documents cités:
**GB-A- 2 165 414**

• **1993 IEEE NATIONAL RADAR CONFERENCE, 20 Avril 1993, LYNNFIELD, USA pages 17 - 22, XP389739 BETHKE ET AL. 'A novel near-range Radar Network for the Guidance and Control of Vehicles on Airport Manoeuvering Areas'**

**Description**

L'invention se rapporte au domaine technique des dispositifs radar de surveillance d'une zone, en particulier au sol, et s'applique notamment aux aéroports, où il y a lieu de surveiller les aéronefs, véhicules, et plus généralement les objets, sur l'aire de manoeuvre de l'aéroport.

On connaît déjà des radars de veille de type panoramique qui utilisent une antenne tournant régulièrement autour d'un axe vertical et illuminant à un instant donné à l'aide d'un faisceau étroit, un dièdre d'arête verticale, c'est-à-dire une faible zone en azimut autour de l'antenne, ce qui permet de mesurer l'azimut des aéronefs détectés. La distance radiale des aéronefs étant également mesurée, la position horizontale d'un aéronef en est déduite. Les aéronefs sont alors par exemple visualisés sur un écran circulaire de type télévision, sous forme de points lumineux dont l'emplacement correspond à la position horizontale des aéronefs.

On connaît aussi des radars de surveillance aérienne qui utilisent en outre pour l'analyse de l'espace en site, une antenne tapissée de déphaseurs dont on commande à volonté et instantanément le déphasage pour modifier sensiblement instantanément la direction de rayonnement.

L'inconvénient de ces deux types de radars à antenne mécaniquement mobile est notamment de gaspiller l'énergie de rayonnement dans des directions non intéressantes.

Par ailleurs, de tels radars sont de mise en oeuvre onéreuse, ce qui limite leur exploitation à des aéroports majeurs.

L'invention apporte une solution à ces problèmes.

Ainsi, un premier but de l'invention est de fournir un radar de surveillance au sol pour aéroport à antenne fixe et de mise en oeuvre simple et peu couteuse.

Un autre but de l'invention est de fournir un radar dont les éléments essentiels et constitutifs sont modulaires pour permettre de couvrir une large gamme d'aéroports depuis les gros aéroports jusqu'aux aéroports secondaires.

Elle porte sur un dispositif radar de surveillance d'une zone du sol, en particulier d'un aéroport, destiné à être disposé selon une relation géométrique prédéterminée par rapport à ladite zone.

Selon une définition générale de l'invention, le dispositif radar comprend en combinaison:

- au moins une antenne fixe, définissant un réseau d'éléments rayonnants rangés par colonnes verticales, et associés à un réseau d'éléments déphaseurs, les éléments rayonnants des différentes colonnes verticales obéissant tous à la même loi de phase, tandis que le réglage des déphaseurs est susceptible de changer sur commande d'une colonne verticale à la suivante, pour fournir un balayage électronique de l'espace en gisement dans le plan horizontal,

- une source d'émission, propre à délivrer un signal hyperfréquence d'une puissance prédéterminée à au moins une fréquence prédéterminée,

- des moyens d'émission/réception hyperfréquence, avec:

  . au moins un circulateur, possédant une entrée reliée à la source d'émission, une entrée/sortie reliée au réseau d'éléments déphaseurs, et une sortie,
  . au moins une voie d'émission propre à véhiculer le signal d'émission vers le réseau d'éléments déphaseurs, par l'entrée du circulateur,
  . au moins une voie de réception propre à véhiculer le signal HF reçu du réseau d'éléments déphaseurs via la sortie du circulateur,
  . des moyens pour subdiviser la voie de réception en un signal somme et au moins un signal différence,

- un premier et un second éléments récepteurs avec changement de fréquence, recevant respectivement les signaux somme et différence, et fournissant des sorties codées en numérique,

- des moyens de traitement des signaux numériques issus des premier et second éléments récepteurs, pour la détection radar d'objets dans la zone surveillée, et

- des moyens de commande du réseau de déphaseurs.

Avantageusement, ladite loi de phase est réalisée par construction des colonnes verticales d'éléments rayonnants.

Selon un premier mode de réalisation du dispositif selon l'invention, chaque colonne d'éléments rayonnants de l'antenne est associée à un élément déphaseur commandé, et les moyens d'émission/réception hyperfréquence comprennent:

- m distributeurs d'émission/réception, qui subdivisent l'antenne en m groupes de n colonnes d'éléments rayonnants, groupes auxquels correspondent m groupes d'éléments déphaseurs,

- m modules d'émission/réception, ayant chacun une entrée/sortie, reliée à l'un des distributeurs d'émission/réception, une entrée de signal d'émission, et une sortie de réception,

- des moyens pour relier les entrées d'émission des m modules d'émission/réception à la source d'émission, et

- des moyens pour construire un signal somme et au moins un signal différence, à partir des sorties de réception des m modules d'émission/réception.

Dans ce premier mode, chaque module d'émission-réception comprend un amplificateur de puissance à l'état solide pour l'émission.

Selon un second mode de réalisation du dispositif selon l'invention, chaque colonne d'éléments rayonnants de l'antenne est associée à un élément déphaseur commandé, et les moyens d'émission/réception hyperfréquence comprennent:

- deux distributeurs d'émission/réception, qui subdivisent l'antenne et les déphaseurs en des moitiés gauche et droite,

- des moyens pour construire un signal somme et au moins un signal différence à partir des deux entrées/sorties simples de ces deux distributeurs,

- un circulateur dont l'entrée/sortie reçoit le signal somme, tandis que son entrée est relié à la source d'émission, et que sa sortie et le signal différence sont respectivement amenés aux premier et second éléments récepteurs.

Dans ce second mode, la source d'émission comprend un émetteur à tube.

En pratique, la source d'émission comprend un oscillateur hyperfréquence, propre à émettre un signal d'une fréquence prédéterminée et d'une largeur de bande prédéterminée, et un synthétiseur de fréquence propre à fournir des signaux locaux, ainsi qu'à coopérer avec l'oscillateur hyperfréquence pour permettre une modulation linéaire discrète de la fréquence d'émission, d'impulsion à impulsion, en agissant en conséquence sur les signaux locaux, ladite modulation linéaire conservant la relation de phase entre les différentes fréquences d'émission.

De préférence, une colonne d'éléments rayonnants est réalisée par un guide d'onde à fentes rayonnantes, alimenté par une transition guide/coaxial.

En pratique, les déphaseurs sont du type déphaseur réciproque à diode, commandés numériquement.

Selon une autre caractéristique de l'invention, chaque élément récepteur comprend au moins un changement de fréquence, suivi d'une démodulation amplitude/phase et d'un codage en numérique, sous forme de signaux complexes.

En pratique, pour chaque pointage d'antenne, le cycle d'émission comprend l'émission de chacune des différentes fréquences, et ce plusieurs fois.

Avantageusement, les fréquences d'émission sont utilisées dans un ordre différent de l'ordre exact de leurs valeurs nominales.

De préférence, le cycle est répété pour une valeur différente de la fréquence de récurrence des impulsions d'émission.

Selon un autre aspect de l'invention, les moyens de traitement du signal sont du type à compression d'impulsion en distance, par écartométrie monopulse en azimut, et par traitement Doppler en vitesse.

En pratique, les moyens de traitement comprennent des moyens de transformation de Fourier, pour la compression d'impulsion et/ou l'intégration cohérente.

Avantageusement, les moyens de traitement réalisent:

- la détection et le filtrage de plots radar, à partir des signaux reçus,
- l'écartométrie angulaire,
- un affinage en vitesse, et
- un affinage en distance.

Avantageusement, l'affinage en vitesse est accompagné d'un lever d'ambiguïté en vitesse, utilisant la seconde fréquence de récurrence.

En pratique, le balayage électronique d'antenne est adapté en fonction des objets détectés et des zones à surveiller.

Dans un exemple de réalisation du dispositif selon l'invention, le faisceau d'analyse du réseau d'éléments rayonnants présente une ouverture en azimut dans l'axe de l'ordre de 1,5°, pour un angle de balayage en gisement de l'ordre de 150°, avec un lobe en site de type cosécante carrée inversée.

La présente invention a également pour objet une installation radar pour la surveillance d'une zone.

Selon une définition générale, elle comprend:

- au moins un dispositif radar mentionné ci-avant, et
- des moyens de traitement de données reliés aux moyens de traitement du signal pour la surveillance radar au sol de ladite zone, en fonction de la détection desdits objets.

Avantageusement, une partie au moins des moyens de traitement de signal est partagée entre plusieurs dispositifs radar.

D'autres caractéristiques et avantages de l'invention apparaîtront à la lumière de la description détaillée ci-après et des dessins dans lesquels:

- la figure 1 est une représentation schématique d'un radar à antenne fixe et amplificateurs à l'état solide distribués selon l'invention,

- la figure 2 est une représentation simplifiée du radar de la figure 1,

- la figure 3 est une représentation schématique d'un radar à antenne fixe et à émetteur centralisé selon l'invention,

- les figures 4 à 6 sont respectivement un schéma des grandes fonctions d'une installation radar à une antenne fixe selon l'invention, un schéma de disposition de l'antenne fixe et un mode d'implantation de cette antenne fixe,

- les figures 7 et 8 sont respectivement une représentation schématique des grandes fonctions d'une installation radar à deux antennes fixes selon l'invention, et un schéma de disposition de ces deux antennes fixes,

- la figure 9 illustre un mode d'implantation de trois antennes fixes,

- les figures 10A et 10B sont deux autres schémas de disposition d'antennes fixes multiples selon l'invention,

- la figure 11 représente schématiquement une installation comprenant un radar principal et un radar éloigné selon l'invention,

- la figure 12 est un schéma de disposition des radars principal et éloigné de la figure 11,

- la figure 13 illustre schématiquement le gain et le diagramme en site du radar selon l'invention,

- la figure 14 est une vue de face en perspective d'une antenne fixe selon l'invention,

- la figure 15 est une vue partielle en perspective de l'antenne de la figure 14, montrant sa liaison d'alimentation,

- la figure 16 est une partie détaillée de la figure 15,

- la figure 17 est une vue arrière du plateau rayonnant de l'antenne fixe de la figure 15,

- la figures 18 et 19 sont des diagrammes en gisement obtenus selon l'invention,

- les figures 20 et 21 sont des diagrammes en site obtenus selon l'invention,

- la figure 22 est un schéma des moyens synthétiseurs de fréquences selon l'invention,

- la figure 23 un schéma d'une source d'émission selon l'invention,

- la figure 24 est un schéma d'un tube à ondes progressives utilisé comme émetteur centralisé selon une variante de l'invention,

- la figure 25 est un diagramme illustrant la modulation de fréquence linéaire selon l'invention,

- les figures 26A à 26D sont des chronogrammes illustrant un cycle d'émission,

- les figures 27 et 28 illustrent schématiquement le traitement des données et le traitement radar selon l'invention,

- les figures 29 et 30 illustrent différemment le changement de fréquence, la démodulation et le codage dans un élément récepteur, et

- la figure 31 est un schéma d'un module émission/ réception à l'état solide selon l'invention.

Les dessins annexés sont, pour l'essentiel, de caractère certain. En conséquence, ils font partie intégrante de la présente description. Ils pourront donc non seulement servir à mieux faire comprendre celle-ci, mais aussi contribuer à la définition de l'invention, le cas échéant.

D'une façon générale, un radar de surveillance au sol surveille et gère les mouvements sur une zone de terrain qui, dans le cas d'un aéroport, est l'aire de manoeuvre de celui-ci.

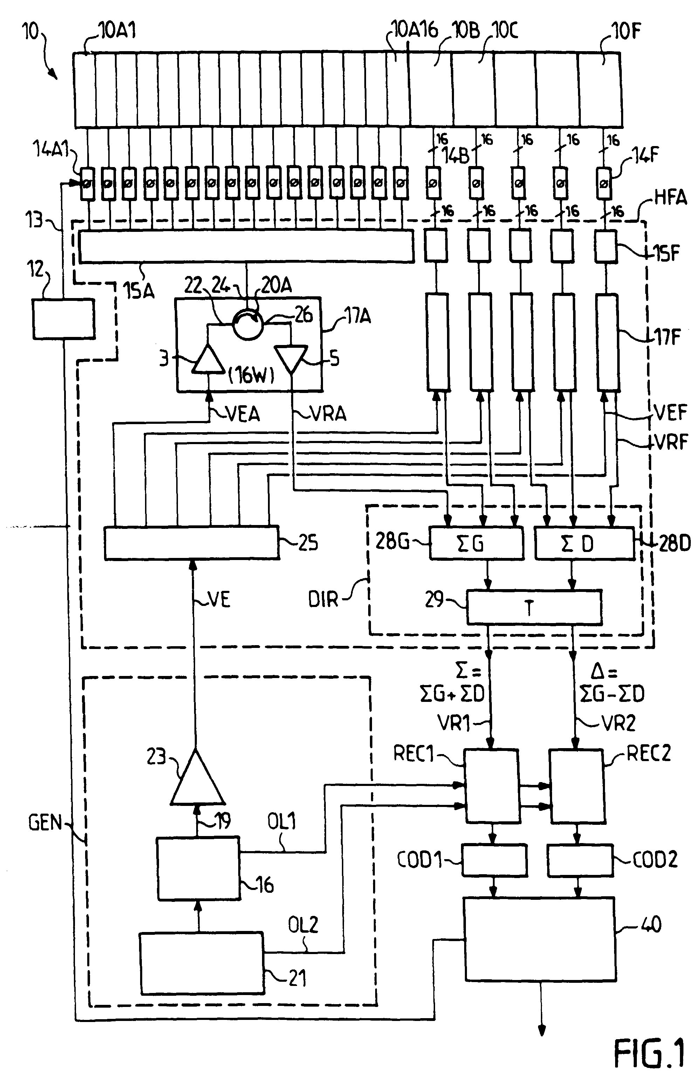

En référence aux figures 1 à 3, le dispositif radar selon l'invention comprend une antenne fixe 10, définissant un réseau d'éléments rayonnants rangés par colonnes verticales, et associés à un réseau d'éléments déphaseurs 14. Les éléments rayonnants des différentes colonnes verticales obéissent tous à la même loi de phase. Le réglage des déphaseurs est modifiable sur commande d'une colonne verticale à la suivante, pour fournir un balayage électronique de l'espace en gisement dans le plan horizontal.

Le fait de pouvoir construire ce type de radar avec une antenne-réseau fixe a de nombreux avantages, par rapport aux grandes antennes à balayage mécanique connues:

- une antenne fixe supprime la mécanique de rotation, ce qui accroît la fiabilité et diminue les coûts de mise en oeuvre (suppression des joints tournants notamment).

- l'antenne-réseau a l'avantage de présenter une dégradation lente des performances, ce qui résout en partie les problèmes de disponibilité et de maintenance.

- par ailleurs, elle est beaucoup plus facilement implantable sur tout bâtiment ou structure.

En pratique, ladite loi de phase est réalisée par construction des colonnes verticales d'éléments rayonnants, comme on le verra plus loin.

Chaque colonne d'éléments rayonnants de l'antenne 10A1-10A16 est associée à un élément déphaseur commandé 14A1-14A16 (au lieu d'un déphaseur par élément rayonnant individuel).

Le signal hyperfréquence à émettre 19 est généré par une source d'émission GEN, propre à délivrer un signal hyperfréquence HF d'une puissance prédéterminée, de l'ordre de 100 Watts, à au moins une fréquence prédéterminée, qui peut être en bande X ou en bande KU par exemple.

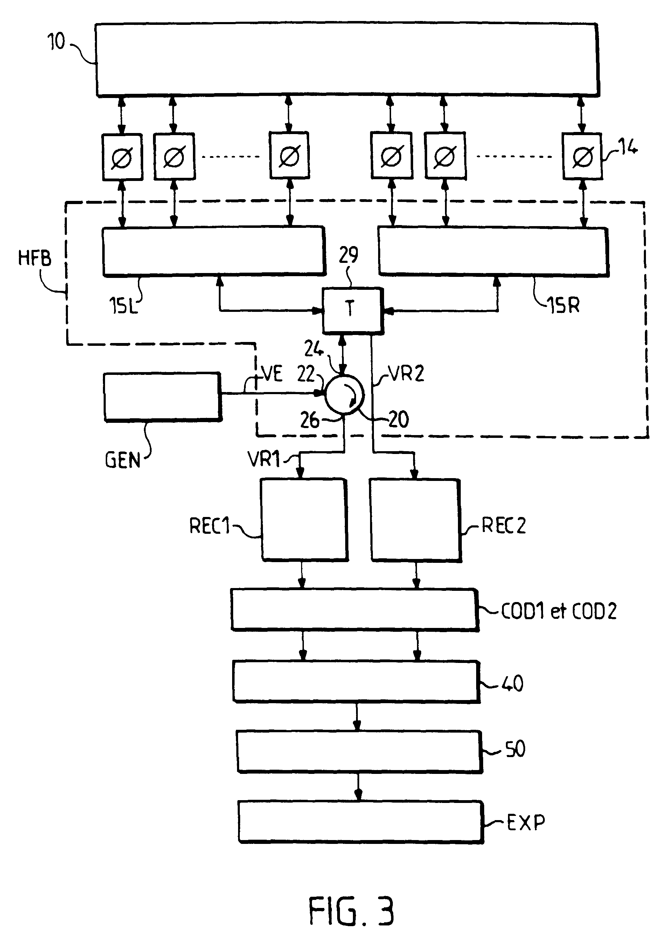

Deux structures des moyens d'émission/réception hyperfréquence sont proposées (HFA - figure 1 ; ou HFB - figure 3).

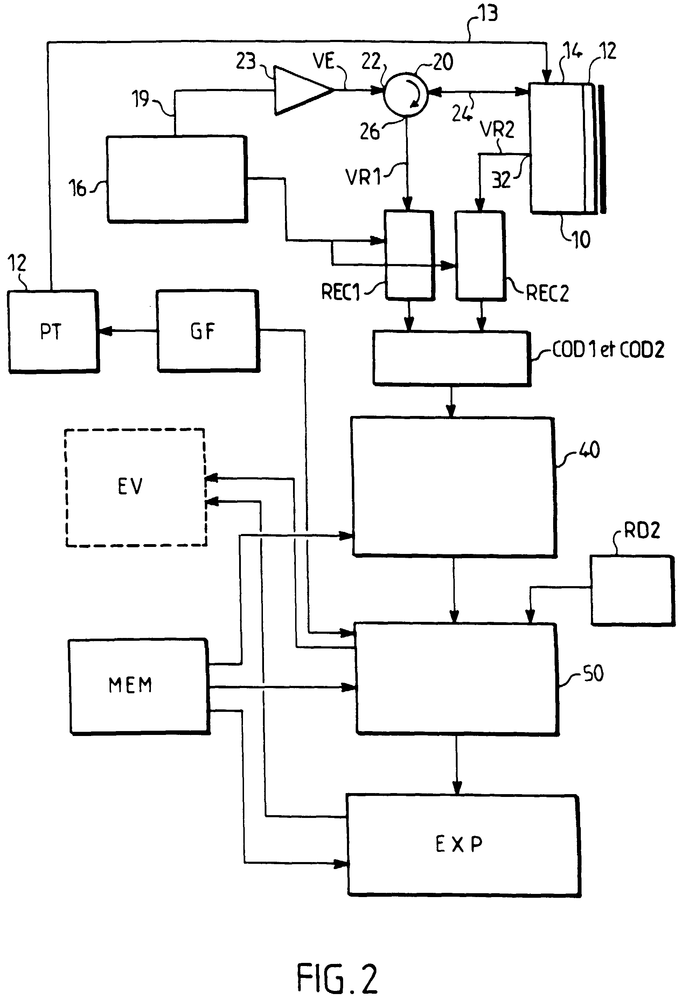

Dans les deux cas, ils comprennent fonctionnellement (figure 2) :

- au moins un circulateur 20, possédant une entrée 22 pour l'émission, une entrée/sortie 24 reliée au réseau d'éléments déphaseurs 14, et une sortie 26,

- au moins une voie d'émission VE qui amène le signal d'émission HF à l'entrée 22 du circulateur,

- au moins une voie de réception VR ou VR1 (somme) qui amène le signal HF issu du réseau d'éléments déphaseurs 14 en passant par l'entrée/sortie 24 et la sortie 26 du circulateur,

- au moins une autre voie de réception VR2 (différence), qui ne passe par le circulateur,

- un premier et un second éléments récepteurs avec changement de fréquence REC1 et REC2, recevant respectivement les signaux somme et différence, et fournissant des sorties codées en numérique,

- des moyens de traitement 40 des signaux numériques issus des premier et second éléments récepteurs REC1 et REC2, pour la détection radar d'objets dans la zone surveillée, et

- des moyens de commande 12 du réseau de déphaseurs 14.

Dans la version actuellement préférée (figure 1), les moyens d'émission/réception hyperfréquence HFA comprennent :

- m (avec m=6 par exemple) distributeurs d'émission/réception 15, qui subdivisent l'antenne en m groupes de n (avec n=16 par exemple) colonnes d'éléments rayonnants 10A-10F, groupes auxquels correspondent m groupes d'éléments déphaseurs 14A-14F,

- m modules d'émission/réception 17A-17F, ayant chacun une entrée/sortie, reliée à l'un des distributeurs d'émission/réception, une entrée de signal d'émission, et une sortie de réception,

- des moyens 25 pour relier les entrées d'émission des m modules d'émission/réception à la source d'émission GEN, et

- des moyens 28G,28D,29 pour construire un signal somme VR1 et au moins un signal différence VR2, à partir des sorties de réception des m modules d'émission/réception.

Dans ce mode de réalisation, chaque module d'émission-réception comprend un amplificateur de puissance à l'état solide, d'une puissance de 16 Watts par exemple.

Dans une variante de réalisation (figure 3), les moyens d'émission/réception hyperfréquence HFB comprennent :

- deux distributeurs d'émission/réception 15L, et 15R, qui subdivisent l'antenne et les déphaseurs en des moitiés gauche et droite,

- des moyens 29 pour construire un signal somme VR1 et au moins un signal différence VR2 à partir des deux entrées/sorties simples de ces deux distributeurs,

- un circulateur 20 dont l'entrée/sortie reçoit le signal somme, tandis que son entrée est relié à la source d'émission, et que sa sortie et le signal différence sont respectivement amenés aux premier et second éléments récepteurs.

Dans ce second mode de réalisation, un émetteur de puissance à tube est incorporé à la source d'émission.

De façon générale, la source d'émission GEN comprend un oscillateur hyperfréquence 16, opérant à une fréquence prédéterminée et une largeur de bande prédéterminée. Il s'y ajoute un synthétiseur de fréquence 21 propre à fournir des signaux locaux. De préférence, il coopère aussi avec l'oscillateur hyperfréquence pour permettre une modulation linéaire discrète de la fréquence d'émission, d'impulsion à impulsion, que l'on décrira plus loin ; et il agit en conséquence sur les signaux locaux. De cette manière, ladite modulation linéaire peut être obtenue avec conservation de la relation de phase entre les différentes fréquences d'émission.

En référence à la figure 2, la gestion GF du pointage du faisceau PT adresse une mémoire de directions de pointage prédéterminées ou recalculées, dont le contenu permet la commande des éléments déphaseurs 14 de l'antenne 10. Cette gestion s'appuie notamment sur le contenu d'une mémoire géographique MEM. Dans l'application surveillance au sol de l'aire de manoeuvre de l'aéroport, il est prévu des moyens d'exploitation EXP des données ainsi traitées.

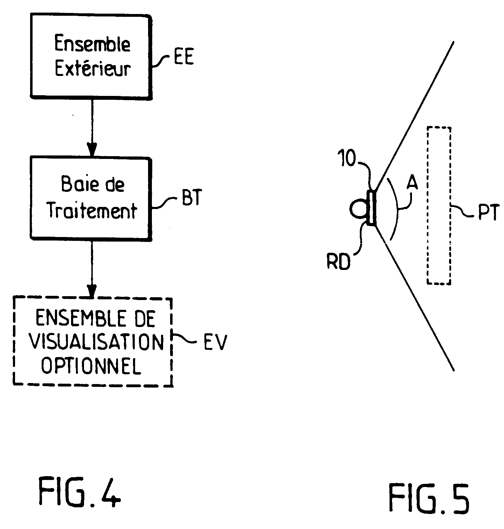

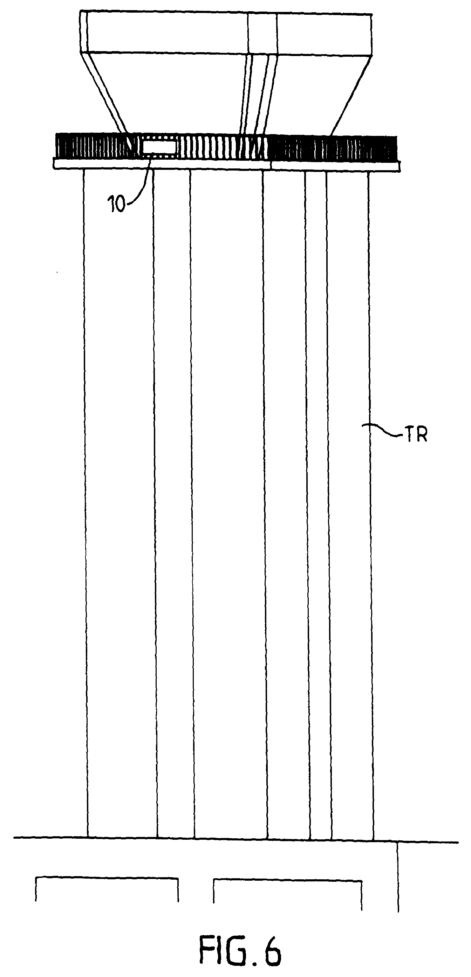

En référence aux figures 4 à 6, l'antenne fixe 10 et les modules d'émission/réception 17 sont logés dans un ensemble EE situé à l'extérieur, par exemple au sommet d'une tour de contrôle TR (figure 6), selon une relation géométrique prédéterminée par rapport à l'aire de manoeuvre de l'aéroport. La figure 5 montre qu'une installation radar RD à une seule antenne fixe 10 assure une couverture d'un angle A de 150° environ en gisement.

Les moyens générateurs GEN ainsi que les moyens de traitement du signal 40 et des données 50 sont logés dans une baie de traitement intérieure BT. En option, l'installation radar RD comprend en outre un ensemble de visualisation séparé EV.

La configuration à trois blocs EE, BT et le cas échéant EV trouve une application avantageuse pour les aéroports à une seule piste PT.

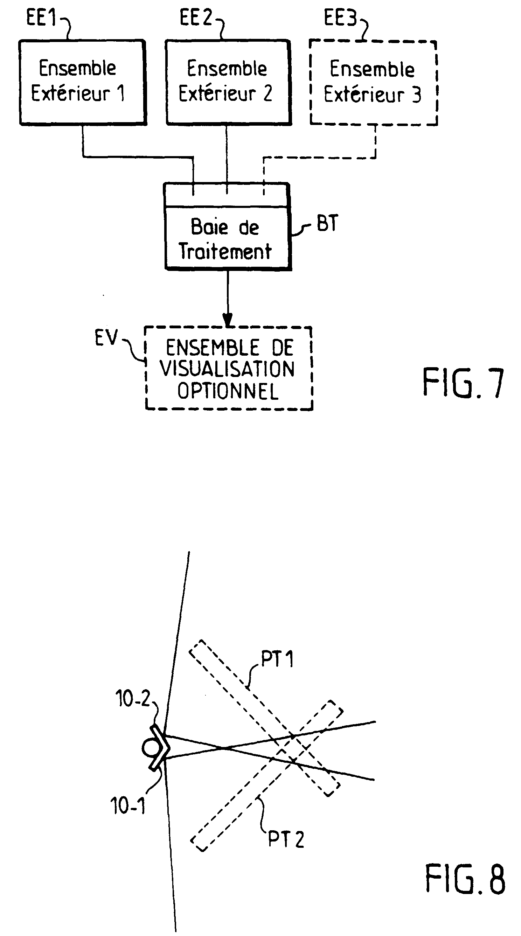

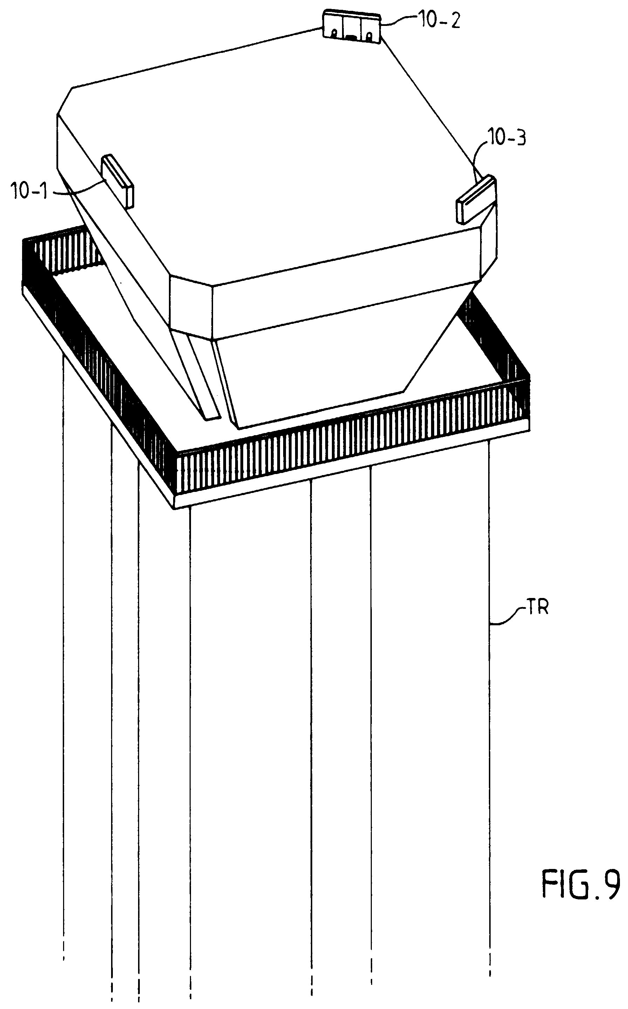

Sur les figures 7 à 9, l'installation radar selon l'invention comprend deux ou trois antennes fixes 10-1 à 10-3 associées chacune à un ensemble extérieur EE1 à EE3 et à une baie de traitement BT commune. Cette configuration à cinq blocs EE1, EE2, EE3, BT et le cas échéant EV trouve une application avantageuse pour les aéroports à au moins deux pistes PT1 et PT2 disposées en croix.

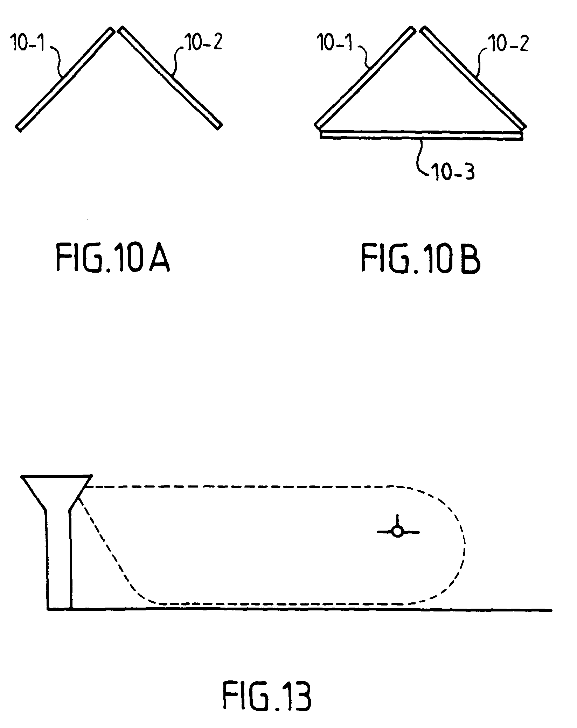

En référence aux figures 10A et 10B, les antennes multiples permettent une couverture en gisement d'un angle plus élevé, par exemple jusqu'à 300° avec deux antennes 10-1 et 10-2 ou 360° et plus avec trois antennes 10-1 à 10-3.

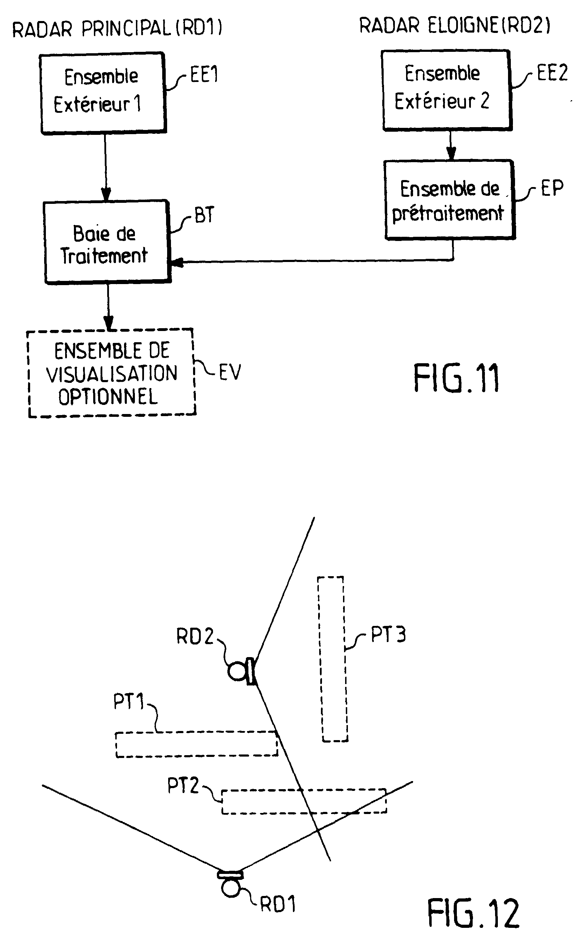

Par ailleurs (figures 11 et 12), pour les aéroports de grande taille, comprenant par exemples deux pistes PT1 et PT2 parallèles entre elles et une piste PT3 perpendiculaire aux pistes PT1 et PT2, il convient d'utiliser un radar principal RD1 possédant les blocs EE1, BT et EV mentionnés ci-avant (figure 3), et en outre un radar éloigné RD2 possédant un ensemble de prétraitement EP relié à la baie de traitement commune BT pour lui transmettre les informations émanant de l'ensemble extérieur EE2. Une partie au moins des traitements est regroupée en BT.

Bien entendu, le radar principal RD1 et le radar éloigné RD2 peuvent comprendre plusieurs antennes fixes, le cas échéant.

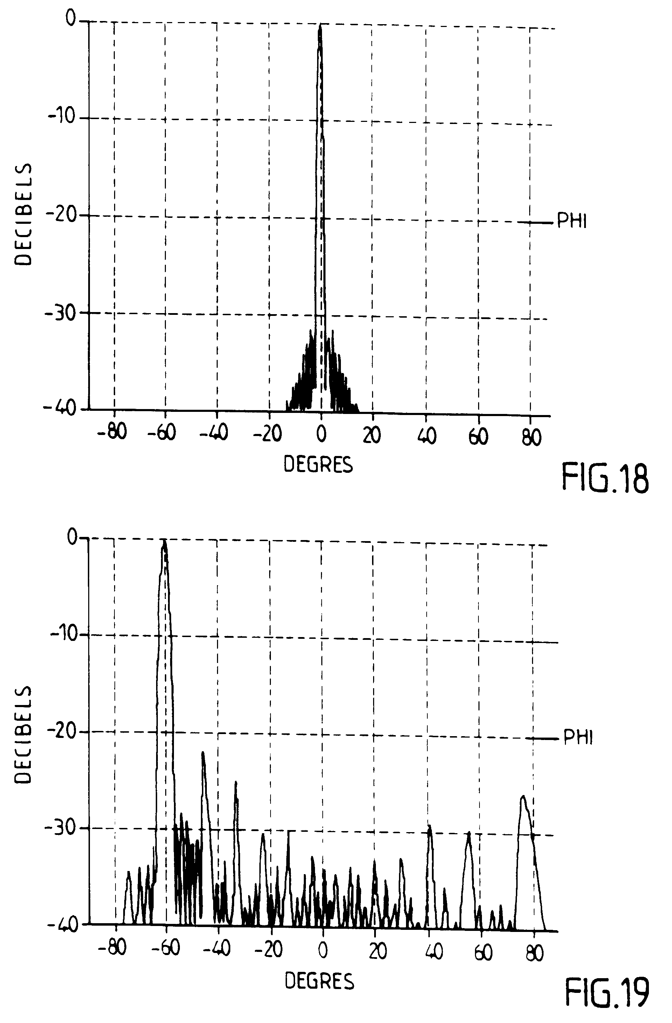

Le diagramme de gain de l'antenne présente un faisceau ayant une ouverture de l'ordre de 1,5° en azimut dans l'axe (à 0°, figure 18), et de 3° pour 60° de dépointage (figure 19).

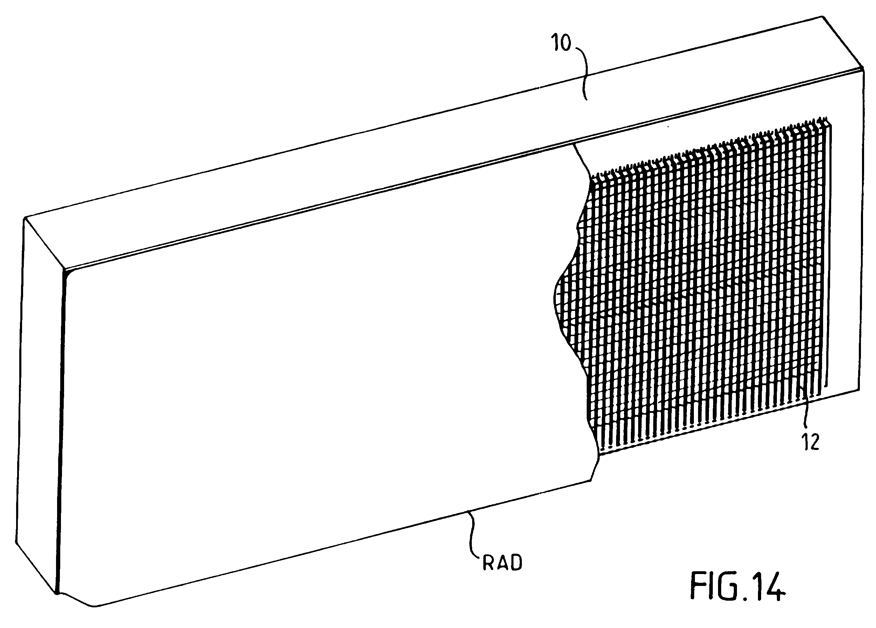

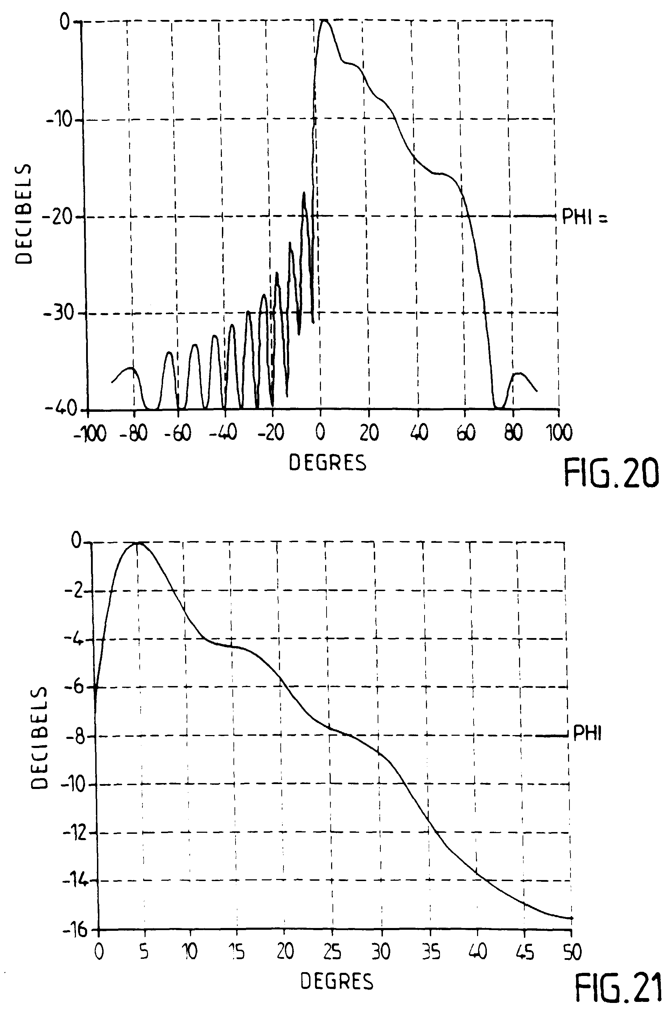

Le diagramme de gain en site est un lobe de type cosécante carrée inversée, c'est à dire sensiblement tangent à l'horizontale pour permettre une détection des aéronefs en vol (figures 13 et 20, agrandie en 21).

Le gain de l'antenne est de l'ordre de 30 dB pour la détection d'objets de SER (surface équivalente radar) de 1 m$^2$.

Le niveau des lobes secondaires permet d'éviter la détection d'obstacles de fortes SER en azimut et de nuages en site positif. Le niveau des premiers lobes secondaires est environ à -25dB par rapport au lobe principal en azimut et - 20dB en site.

Les dimensions de l'antenne sont de l'ordre de 1,50m x 0,60m. La figure 14 montre l'antenne fixe 10 équipée de son radôme RAD. Il s'agit d'une surface rayonnante plane rectangulaire constituée, par exemple de 96 éléments rayonnants du type guides à fentes.

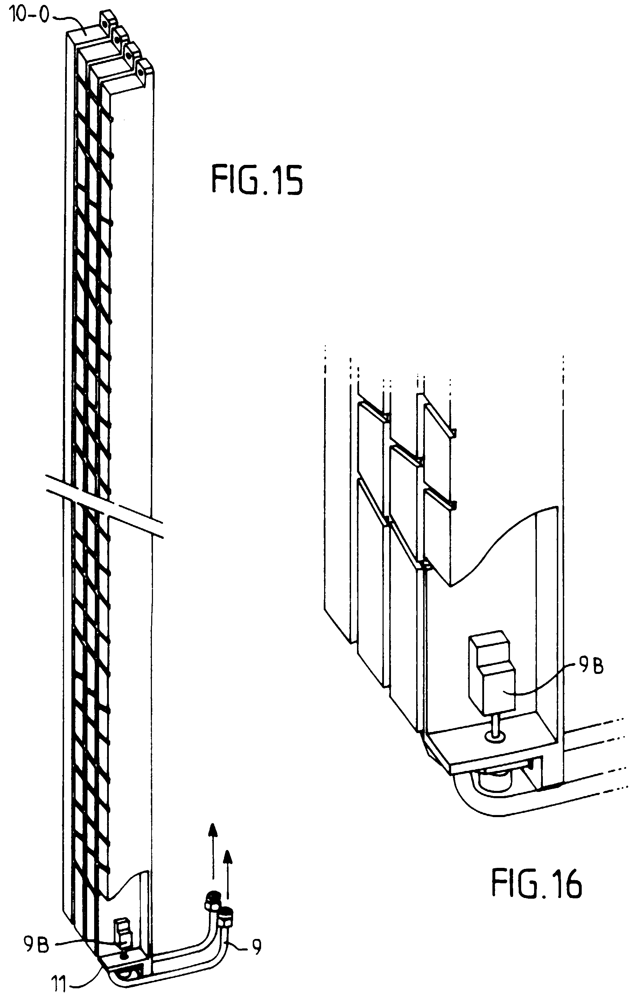

En référence à la figure 15, chaque guide est alimenté à son extrémité inférieure 11 par une jonction 9 du type guide-câble coaxial, à l'exception du guide terminal 10-0 qui n'est pas alimenté. Une transition guide-coaxial longitudinale 9B alimente chaque colonne (figure 16), sauf les extrêmes.

Chaque guide d'onde alimenté fonctionne en mode résonnant. la puissance est prélevée à intervalles réguliers par des fentes taillées sur le petit côté, pour obtenir la loi de phase désirée.

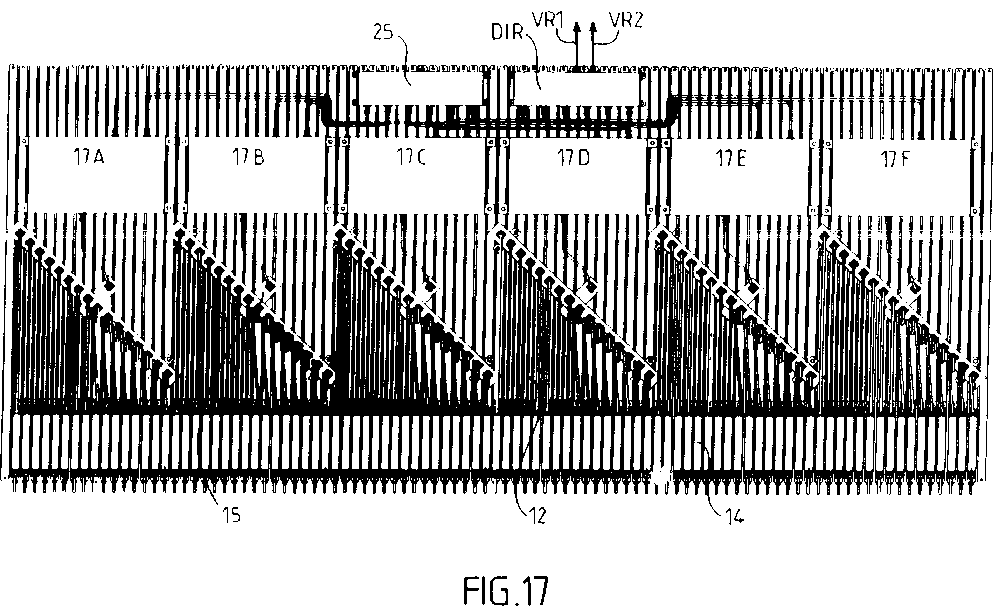

La figure 17 montre comment les répartiteurs 15 décrits en référence à la figure 1, sont plaqués sur la face arrière du plateau rayonnant, subdivisé en 6 sous-ensembles de 16 guides chacun. Chaque guide a son déphaseur commandé 14. Chaque module 17A à 17F est associé à l'un des 6 sous-ensembles.

En symétrie, l'unité DIR fournit les première et seconde voies de réception VR1 et VR2 (signal hyperfréquence reçu).

Le radôme plan RAD, à faibles pertes, est par exemple du type sandwich constitué d'une couche quart d'onde de mousse diélectrique pris entre deux couches minces de verre de résine. Il est maintenu à quelques centimètres du plateau rayonnant afin que sa présence ne perturbe pas directement les caractéristiques radioélectriques des éléments rayonnants.

Un dispositif de climatisation du commerce (non représenté) à circulation d'air suffit pour assurer le maintien d'une température acceptable à l'intérieur de l'enceinte ainsi formée, ainsi que le dégivrage éventuel du radôme.

L'ensemble formant l'antenne est fixé sur une structure mécanique de maintien.

L'antenne est conçue de façon à produire un diagramme conformé dans le plan de site (du type cosécante carrée) et un diagramme du type faisceau étroit ("pencil beam") électroniquement orientable dans +/- 75° dans le plan de gisement.

Le diviseur émission 25 peut être un diviseur bas niveau construit en technologie triplaque constitué d'une cascade d'hybrides assurant la bonne répartition de puissance initiale entre les 6 groupes de 16 guides d'ondes rayonnants.

Le répartiteur 15 est constitué de tronçons de guides résonnants alimentés au centre par des coupleurs en croix. La puissance est prélevée par des sondes électriques de profondeur variable. Un tel répartiteur 15 a l'avantage de présenter peu de pertes.

Bien entendu, d'autres répartiteurs et éléments déphaseurs et rayonnants peuvent être envisagés.

En ce qui concerne le sommateur réception DIR, il s'agit d'un répartiteur de même nature que le diviseur émission 15. Il est constitué de deux sommateurs de facteur 3 reliés aux deux bras latéraux d'une jonction hybride ("T magique") fournissant les voies somme VR1 et différence VR2.

Les lignes de connexion sont prévues en câbles coaxiaux souples ou semi-rigides. Bien que les déphaseurs électroniques 14 puissent être utilisés pour rattraper des erreurs de phases différentielles entre les voies, il est souhaitable que les câbles de même nature aient la même longueur électrique afin de simplifier les opérations de calibration en usine. Il est souhaitable d'obtenir une répartition équiphase à l'entrée des déphaseurs, au demi LSB (bit le moins significatif) près de ces derniers.

L'allure du diagramme dans le plan de site (figure 13) dépend d'une loi d'éclairement (L1 en annexe) affichée le long de chaque guide par ses fentes rayonnantes. Dans la formule L1, y est l'ordonnée le long de la colonne, A un paramètre d'amplitude, et $\Phi$ la phase.

L'intérieur du guide est le siège d'une onde stationnaire. Les fentes sont localisées toutes les demi-longueurs d'onde (guidées), sur le maximum de champ électrique intérieur.

Les caractéristiques géométriques affectées à chaque fente (inclinaison, longueur) confèrent à cette dernière une caractéristique de transfert particulière en amplitude et phase de l'intérieur vers l'extérieur du guide permettant ainsi d'afficher la loi d'illumination souhaitée, donnée par la formule L2 en annexe, où f est l'indice de la fente, $E_i$ le champ électrique à l'intérieur du guide, et T(f) la fonction de transfert de la fente, tandis que $E_r(f)$ désigne le champ rayonné par la fente.

La formation du faisceau étroit en gisement s'obtient en superposant à la loi L2 précédente une loi d'illumination classique en équiphase et à pondération d'amplitude. Ceci est par exemple assuré par le diviseur en émission 25 et les 6 répartiteurs 15 en guide d'onde situés sur la face arrière de l'antenne.

Enfin, l'orientation du faisceau dans le plan de gisement est obtenue en superposant aux lois précédentes une loi de phase linéaire variable donnée par la formule L3 en annexe, où x est l'abscisse le long de l'antenne, $\Theta$ l'angle de déflexion désiré, et K un paramètre que l'homme du métier sait déterminer.

Cette loi de phase L3 est commandée par les 96 éléments déphaseurs situés en amont des 96 éléments rayonnants.

Le duplexage émission/réception est effectuée dans les six modules émission/réception décrits ci-avant en référence aux figures 1 et 2.

La fréquence de fonctionnement de l'antenne est avantageusement dans la bande X avec une variation de +/- 75 MHz autour de la fréquence centrale choisie.

Le gain est de l'ordre de 30 dB à un dépointage de 0° hors radôme, et supérieur à 26 dB à dépointage de +/-60° également hors radôme.

La perte du radôme RAD est inférieure à 1 dB.

Sur les figures 18 et 19, on a représenté le diagramme dans le plan de gisement, en déflexion 0° (figure 18) et en déflexion 60° (figure 19).

La déflexion en gisement est avantageusement commandée par des déphaseurs à 4 bits. La remontée des lobes secondaires en déflexion est essentiellement due à la quantification de la phase, qui est pénalisante sur les réseaux linéaires.

Sur la figure 20, on a représenté le diagramme dans le plan de site et sur la figure 21 on a représenté une vue partielle agrandie du diagramme de la figure 20.

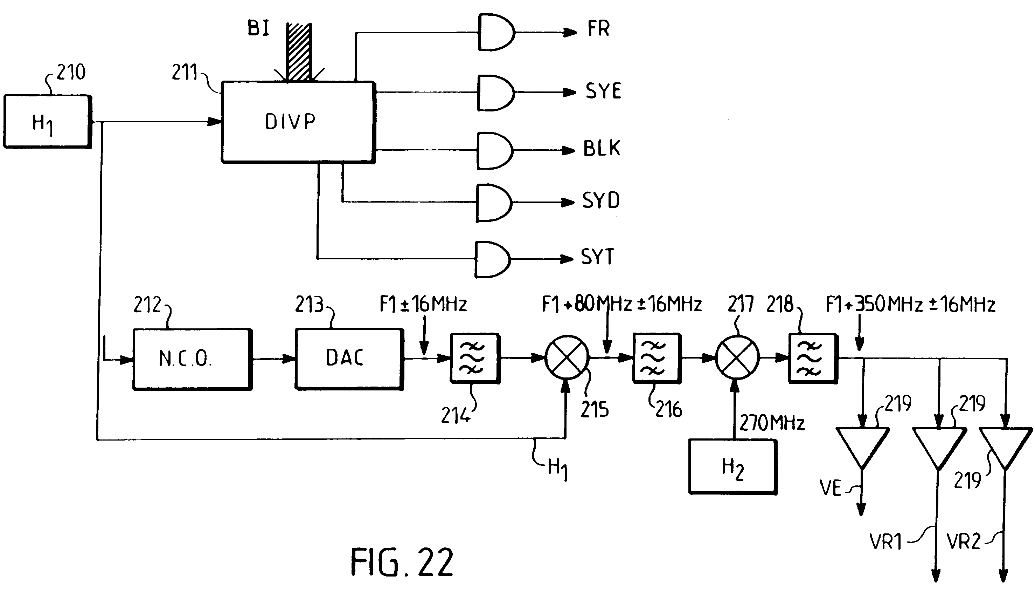

En référence à la figure 22, l'ensemble des éléments formant le synthétiseur de fréquence sont regroupés sur une platine dont le synoptique est le suivant :

- une horloge de base 210 ou H1 à 80 MHz ;

- un diviseur programmable DIVP ou 211 qui donne des signaux synchrones de la fréquence de récurrence FR, une synchronisation émission SYE, un signal de commande de blanking des récepteurs BLK, une synchronisation traitement SYT et une synchronisation déphaseur SYD. Ce diviseur programmable DIVP est commandé par le calculateur central (non représenté) via le bus interne BI.

Les éléments formant les moyens synthétiseurs sont constitués par des circuits intégrés du commerce.

Par exemple, il s'agit d'un élément 212 ou NCO (Numerical Control Oscillator) du type STEL, vendu sous la référence 1176 chez FREQUENCY SYNTHESIS PRODUCT. Sa sortie est appliquée à un convertisseur analogique-numérique 213 ou DAC (Digital Analog Converter) de type AD9712B, vendu par la Société ANALOG DEVICE, dont la sortie est F1 +/- 16 Mhz. Après filtrage 214, et mélange en 215 à l'horloge H1, on obtient F1 +/- 16 Mhz + 80 MHz. un nouveau filtrage 216 est suivi d'un mélange 217 avec l'horloge H2, à 270 MHz, et d'un dernier filtrage 218, qui donne F1 +/- 16 Mhz + 350 MHz. Trois sorties 219 fournissent ceci comme fréquence de démodulation cohérente aux deux voies de réception, et, corrélativement, comme modulation à la source hyperfréquence 16 (figure 1).

Ce synthétiseur de fréquence numérique délivre à la cadence de l'horloge H1 des échantillons d'un signal sinusoïdal avec une résolution de 12 bits.

Ce dernier élément permet de fournir les signaux avec une grande précision de fréquence inférieure à quelques Hz et une pureté spectrale de l'ordre de -80 dB par Hz dans une bande allant de 0 à 32 MHz.

Les moyens synthétiseurs de fréquence sont dimensionnés pour fournir 16 fréquences d'émission tout en restant synchrones en phase. Ils délivrent également les signaux de démodulation en fréquence intermédiaire.

La fréquence des signaux est commandée par un calculateur central via le bus interne BI et une interface numérique (non représentée).

Les signaux issus du DAC sont constitués de trains de 16 fréquences au pas de 2 MHz chacune dans une bande F1 de l'ordre de plus ou moins 16 MHz.

La fréquence F1 varie avec la période de filtrage Doppler pendant laquelle la fréquence de récurrence FR reste constante.

Quand la fréquence FR varie, il est prévu d'ajuster la fréquence F1 pour que la fréquence intermédiaire FI reste un multiple entier de la fréquence FR.

Ceci permet de s'affranchir de certains signaux parasites.

Enfin, les mélangeurs ou circuits de transposition sont réalisés par un double changement de fréquence pour être associés à des filtrages analogiques dans une bande de 32 MHz.

La fréquence intermédiaire FI est choisie de l'ordre de 400 MHz pour éviter la pollution par des émissions VHF environnantes.

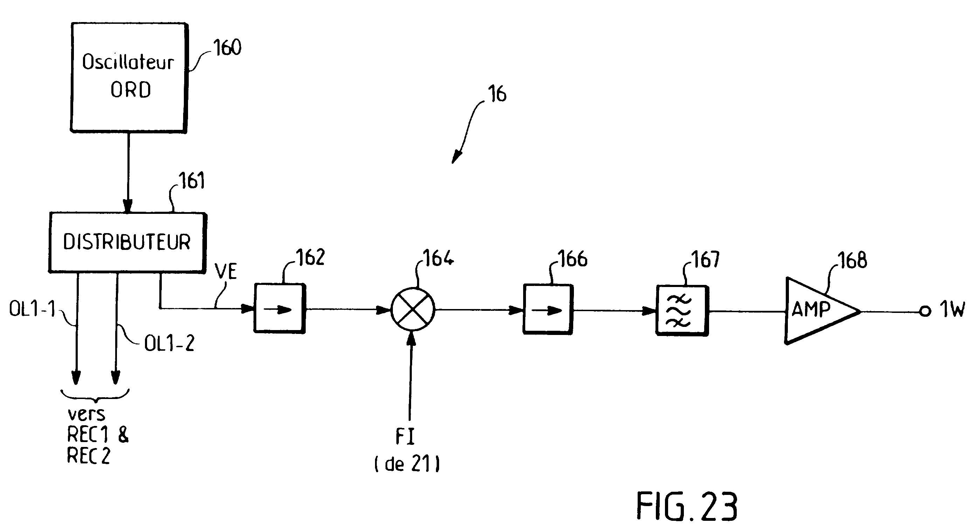

En référence à la figure 23, la source hyperfréquence 16 élabore des signaux d'émission de façon cohérente à partir d'un oscillateur de référence unique 160 ou ORD en bande X réglable sur une plage de 50 MHz.

Un diviseur de puissance 161 ou DISTR distribue le signal vers la voie émission d'une part et parallèlement vers les deux récepteurs REC1 et REC2 pour la démodulation du signal hyperfréquence.

Sur la voie émission VE, le signal hyperfréquence passe l'anti-retour 162 pour être mélangé en 164 avec un signal à fréquence intermédiaire FI +/- 16 MHz provenant du synthétiseur de fréquence.

Après un autre anti-retour 166, un filtrage adapté 167 élimine la fréquence image et les raies parasites hors de la bande.

Enfin, un amplificateur 168 ou AMP de moyenne puissance porte le signal à un niveau d'environ 30 dB (1 Watt).

Le signal pilote est ainsi obtenu directement en bande X à partir d'un oscillateur à résonance diélectrique dont les caractéristiques, tant en stabilité de fréquence qu'en pureté spectrale, sont compatibles de l'application considérée ici.

Dans le mode de réalisation décrit, les principales caractéristiques de l'oscillateur à résonateur diélectrique sont les suivantes :

- une fréquence de fonctionnement en bande X, un réglage mécanique de fréquence de +/- 25 MHz ;

- une puissance de sortie de l'ordre de 20 dBm à 100mW ;

- une précision de fréquence maximale toute condition de l'ordre de +/- 1 MHz ;

- un niveau des raies harmoniques de l'ordre de - 20 dBc ;

- un niveau des raies parasites de l'ordre de - 60 dBc ;

- un bruit de phase en simple bande à 10 kHz de la porteuse de l'ordre de - 90 dBc par Hz et à 100 kHz de la porteuse de l'ordre de - 115 dBc par Hz.

Plusieurs solutions peuvent être envisagées au niveau de l'émission en prenant en compte des contraintes de fiabilité de coût. La recherche d'un MTBF élevé au niveau de l'émetteur amène à rechercher une faible puissance crête. En effet, le MTBF des tubes de faible puissance est plus élevé et fait appel à des tensions d'alimentation plus faibles, ce qui se traduit par une fiabilité accrue.

Compte tenu des traitements possibles et du niveau du rapport signal à bruit nécessaire, la puissance crête est fixée à environ 100 W pour une puissance moyens de l'ordre de 1 à 2 W.

A ce niveau de puissance rayonnée, le radar présente l'avantage d'être peu perturbant en parasitage pour d'autres systèmes.

Selon la figure 1, l'amplification d'émission est à l'état solide.

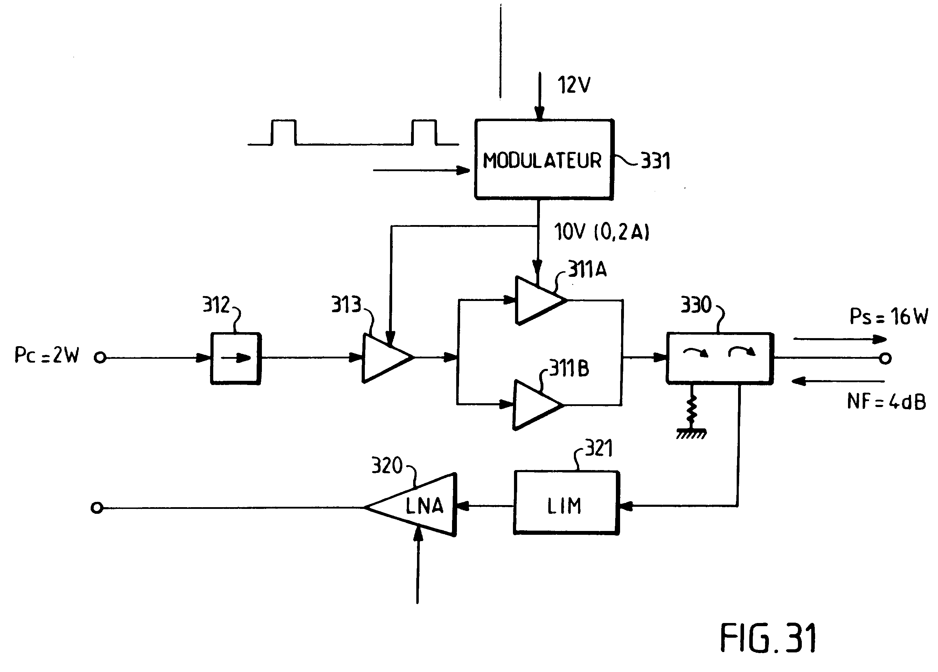

Dans ce cas (figure 31), chaque module comprend un amplificateur de puissance à l'émission (311 A et B). L'amplificateur de puissance reçoit un signal d'environ 3 dBw (2 W) à son entrée, par un anti-retour 312 et un préamplificateur 313 (les éléments 311, 312 et 313 sont des parties du bloc 3 - figure 1). Il fournit en sortie une puissance de 12 dB (16 W), à travers le circulateur 330 (référencé 20 en figure 1). L'amplificateur de puissance utilise deux étages à transistor TEC en AsGa de puissance. Le dernier étage nécessite la mise en parallèle de deux transistors. La tension d'alimentation des deux étages est modulée en impulsions (331) de façon à diminuer la dissipation thermique et améliorer la fiabilité de l'ensemble.

La sortie du circulateur est couplée par un limiteur 321 (protection contre des signaux parasites de niveaux forts et d'origines diverses) à un amplificateur faible bruit 320 (5 en figure 1), inhibé pendant l'émission.

L'amplificateur faible bruit a pour rôle, compte tenu de son gain et de facteur de bruit propre, d'optimiser la sensibilité en réception en rendant négligeable la contribution des pertes qui sont introduites derrière lui. Le facteur de bruit mesuré à l'entrée d'une module émission/réception, incluant les pertes du limiteur et du circulateur est d'environ 4 dB.

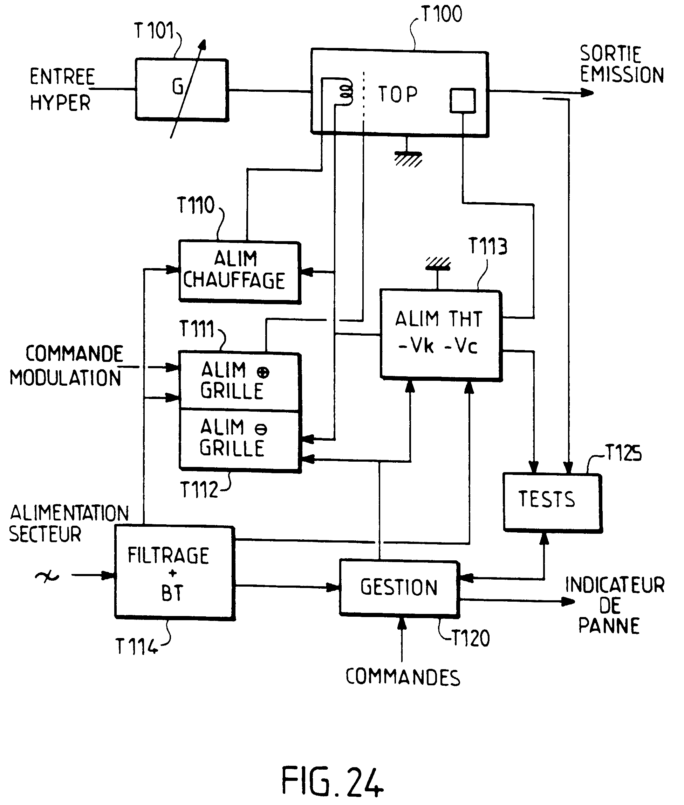

Comme décrit en référence à la figure 3, le module émission/réception peut être envisagé selon une classe dite à émetteur à tube centralisé du type tube à ondes progressives (figure 24), magnétron, etc, ou bien du type émetteur état solide.

Le TOP T100 est muni de son entrée T101 à gain variable, et de ses alimentations habituelles T110 à T114. La gestion T120 et la commande de modulation portent sur les alimentations de grille T111, T112 et de Très Haute Tension T113. Une unité de test, couplée à la sortie du TOP, est prévue en T125.

Dans ce cas d'émetteur centralisé, on peut utiliser un tube à onde progressive, à magnétron synchronisé ou à mini CFA c'est-à-dire Cross Field Amplifier.

Ces variantes utilisent chacune un tube amplificateur, d'où contrainte de temps de préchauffage, vulnérabilité du couple cathode-filament du tube et utilisation de la très haute tension, avec un risque de fiabilité moindre des composants.

Dans le cas d'un émetteur à tube à onde progressive, un tube à grille est nécessaire afin de réaliser la forme d'onde souhaitée.

La qualité spectrale du signal de sortie est directement liée à celle du signal d'entrée, à la qualité des alimentations de chauffage de grilles de cathode et de collecteur ; d'où nécessité d'obtenir des niveaux de bruits et de raies parasites très faibles sur ces paramètres.

L'ensemble de ces alimentations est surveillé en tension et courant afin de maintenir le tube à onde progressive dans sa plage de fonctionnement sous peine de détérioration.

Dans le cas d'un émetteur à magnétron synchronisé ou CFA, la plage de fréquence hyperfréquence est plus réduite, tandis que la fiabilité et les contraintes d'emploi sont du même ordre.

De façon générale, la source bande X est accordable mécaniquement par exemple sur 50 MHz, ce qui permet une utilisation d'un radar éloigné sur des fréquences différentes afin d'éviter tout parasitage mutuel.

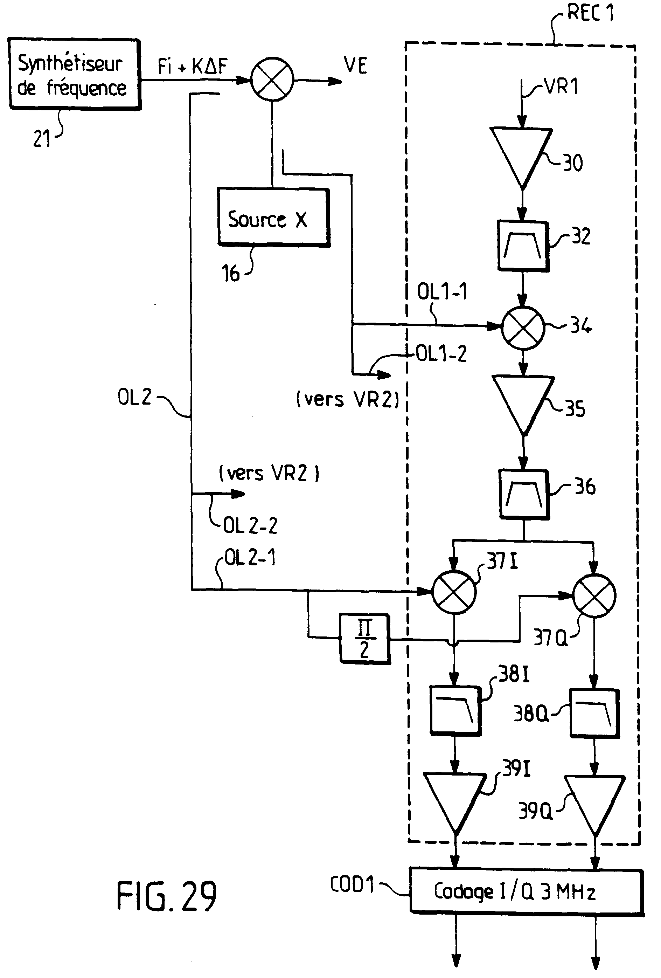

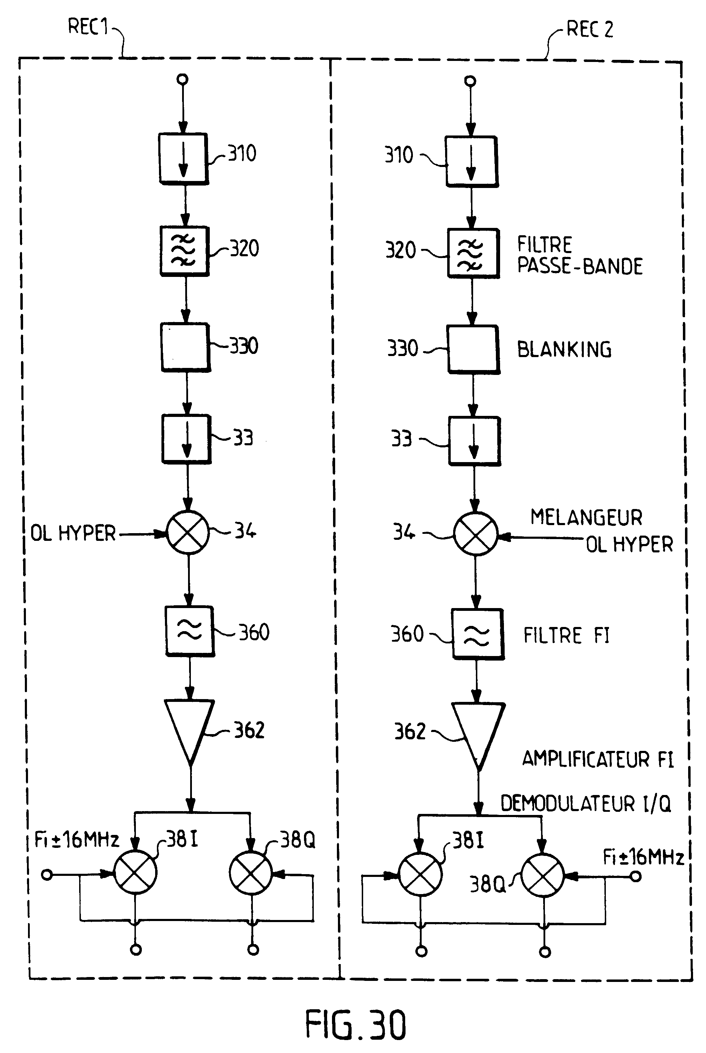

On s'intéressera maintenant à la réception à deux voies, en référence à la figure 29 qui détaille une voie et à la figure 30, qui montre les deux.

Après amplification 30 et/ou antiretour 310, un premier filtrage en hyperfréquence 32 assure une protection vis-à-vis des parasitages externes et des raies parasites de l'oscillateur local. Il couvre une bande de 150 MHz environ.

De préférence, un nouveau blocage pendant l'émission est effectué en 330, avec anti-retour 33.

Le mélangeur 34 avec le local OL1 est suivi d'une amplification 35 et d'un filtrage 36 (ou l'inverse 360, 362).

Le filtrage en fréquence intermédiaire (395 MHz) est adapté à la bande totale émise par le radar (32 MHz).

A la démodulation en phase (37I, 38I, 39I) et en quadrature (37Q, 38Q, 39Q), un filtrage adapté à l'impulsion est effectué sur le signal vidéo.

Les signaux résultants imaginaires et réels sont ensuite convertis en numérique. Ce codage numérique COD1 et COD2 s'effectue à une fréquence de suréchantillonnage de 3 MHz sur 12 bits, ce qui correspond à une dynamique supérieure à 60 dB.

Le filtre passe-bande 32 a pour rôle de limiter la bande utile du récepteur et d'apporter environ 20 dB d'atténuation à la fréquence image, éliminant ainsi le bruit introduit par l'amplificateur hyperfréquence.

Le récepteur décrit réalise ainsi la démodulation des signaux reçus par le radar par une double transposition de fréquence.

On s'intéressera maintenant aux traitements.

La largeur d'impulsion est de l'ordre de 0,5 $\mu$s ce qui correspond à une bande relativement étroite, 2 MHz au niveau du récepteur.

Cette forme d'onde permet de conserver une sensibilité suffisante au niveau du récepteur de manière à pouvoir détecter des aéronefs de faibles surfaces équivalentes radar SER.

La résolution correspondante est de l'ordre de 75 m. La résolution distance du radar étant obtenue par traitement ; la compression distance met en oeuvre une modulation linéaire de la fréquence d'émission. Par exemple 16 fréquences sont utilisées avec un espacement $\Delta F$ de 2 MHz entre elles. La bande résultante est de 32 MHz, ce qui correspond à une résolution distance d'environ 5 m.

La fréquence de récurrence FR est fixée à 30 kHz de manière à offrir une plage distance traitée non-ambiguë de 5 km environ.

Le changement de fréquence d'émission d'impulsion à impulsion permet de s'affranchir des problèmes de détection d'échos de deuxième récurrence.

Une fois le cycle de compression distance effectué, une intégration cohérente Doppler permet l'extraction de la vitesse radiale de l'aéronef. Cette intégration est faite sur huit échantillons issus du traitement précédent, soit une résolution de 3,75 m/s en vitesse radiale. En effet, la fréquence de récurrence Doppler est de 1875 Hz (30 kHz : 16). L'ambiguïté en vitesse radiale est de 28 m/s soit +/- 14 m/s, ce qui est insuffisant.

Pour y remédier, un deuxième cycle de traitement complet selon l'invention (compression + intégration Doppler) est avantageusement effectué en utilisant une fréquence de récurrence décalée.

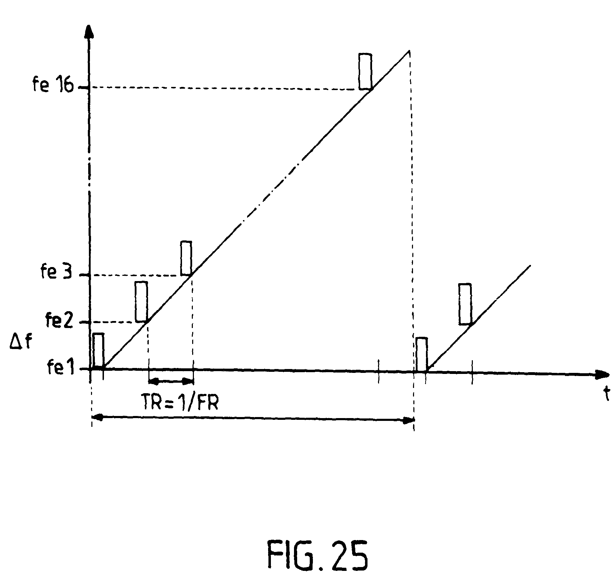

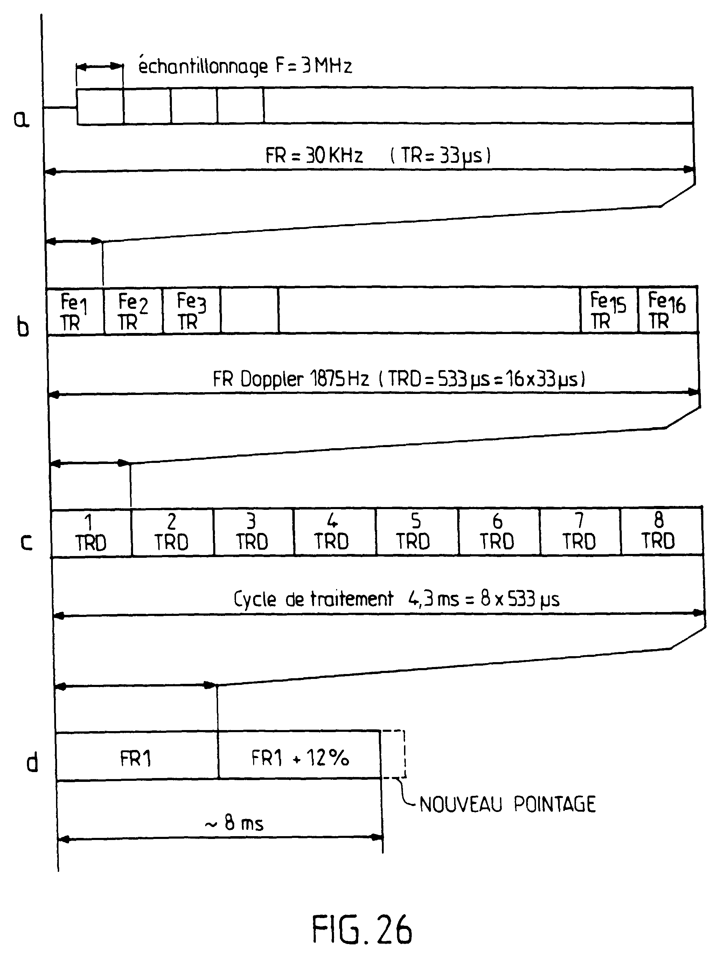

La forme d'onde et le traitement cohérent présentent les caractéristiques suivantes en référence aux figures 25 et 26:

a) à la fréquence de récurrence de base (FR = 30 kHz, soit TR = 33 $\mu$s), un échantillonnage en distance est effectué à 3 MHz.

b) ceci est répété pour les 16 valeurs différentes de la fréquence d'émission Fe1 à Fe16 (figure 25). Il en résulte une cadence FRD de 1875 Hz (pour TRD = 16 * 33 $\mu$s = 533 $\mu$s).

c) un cycle de traitement comprend 8 périodes TRD, et dure donc 4,3 ms.

d) tout ceci est répété pour une seconde valeur de la fréquence de récurrence de base valant FR + 12% par exemple.

e) jusqu'alors, les déphaseurs en gisement ont conservé le même réglage; ce réglage est lors modifié, et l'on recommence.

Le traitement relatif à l'étape b) comprend une transformation de Fourier rapide (FFT) sur 16 points, qui fournit 16 sous-cases par case distance.

Le traitement relatif à l'étape c) comprend une FFT sur 8 points, qui fournit l'intégration classique. A noter que l'on peut utiliser en variante par exemple 16 périodes TRD et une FFT sur 16 points.

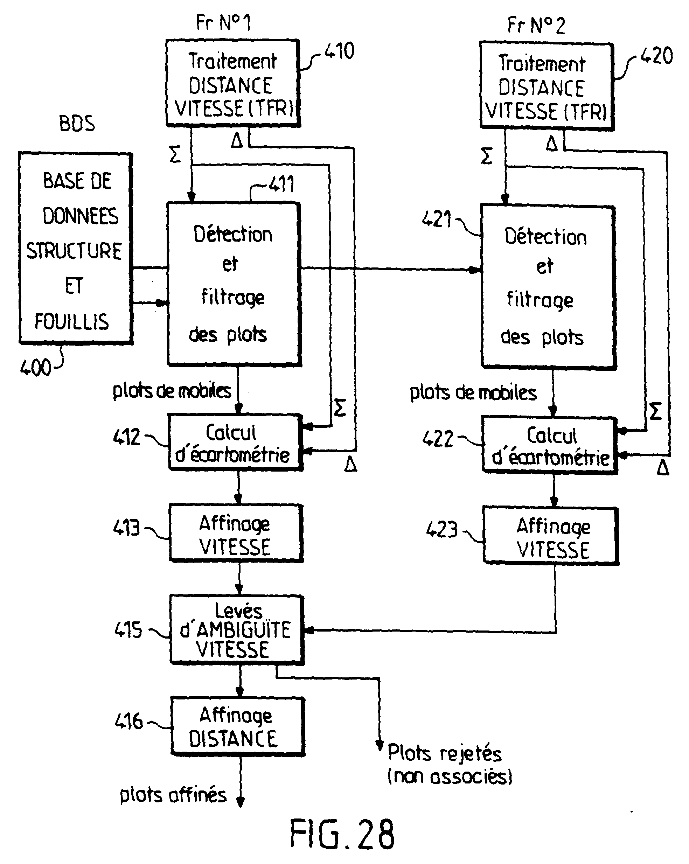

Le traitement distance et ces deux FFT sont réalisés par les unités 410 et 420 (figure 28), respectivement pour les deux fréquences de récurrence. Ces unités sont des processeurs de signaux numériques ou DSP.

En 411 et 421 sont effectués la détection et le filtrage des plots radar obtenus, sur la voie somme.

La détection est effectuée par contraste par rapport au fouillis ou "clutter" de sol.

Cette détection par contraste est faite avec un seuil variable dont la valeur est mémorisée en fonction de la distance et de l'azimut. Cette mémoire de clutter est réactualisée régulièrement pour tenir compte des conditions météorologiques.

La détection du signal n'est effectuée que sur les zones intéressantes. Cette information de validation est prise dans la mémoire géographique 400 qui contient les informations statiques relatives à l'aire de manoeuvre de l'aéroport.

La précision angulaire recherchée est atteinte en utilisant une technique d'écartométrie monopulse d'amplitude (412 et 422), qui réalise un affinage angulaire en azimut. Le taux d'affinage est fonction du rapport signal à bruit et donc plus important sur des gros aéronefs. Il ne doit pas être inférieur à 10, ce qui donne une précision de l'ordre de 0,15° dans l'axe et de 0,3° à 60° de dépointage du faisceau.

Après un affinage vitesse (notamment, interpolation entre plots adjacents en vitesse) en 413 et 423, l'ambiguïté vitesse est levée par comparaison entre les réponses des deux cycles (415). La plage ainsi traitée présente alors une ambiguïté en vitesse radiale très nettement au-delà de +/-100 m/s, ce qui permet de couvrir toute la gamme des vitesses d'approche et de décollage des aéronefs.

Globalement, l'affinage de la vitesse radiale comprend la levée d'ambiguïté sur les informations issues des deux cycles de traitement avec des fréquences de récurrence différentes, et un affinage de la vitesse radiale par pondération entre filtres Doppler. La précision en vitesse radiale obtenue est de l'ordre de 1 m/s.

On procède alors à l'affinage en distance en 416, notamment par interpolation entre plots adjacents en distance et vitesse. Cet affinage distance qui permet d'améliorer la précision distance si nécessaire et d'obtenir la distance vraie par projection de la distance oblique ou courte distance.

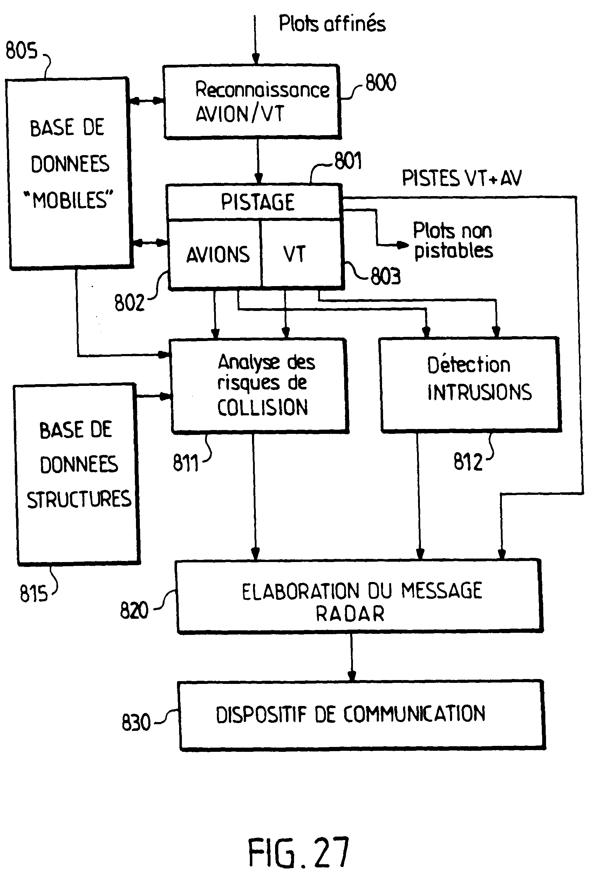

Pour ce qui concerne le traitement des données, il regroupe tous les traitements depuis les plots élémentaires finalement retenus (800, figure 27) jusqu'à la génération de "messages radar".

Il reçoit les plots issus du traitement du signal hyperfréquence mentionné ci-avant et ceux, le cas échéant, issus du pré-traitement d'un radar éloigné.

Le regroupement des plots élémentaires en cible (800) est effectué par test de voisinage et de continuité entre plots 3 dimensions (distance, vitesse et angle), près quoi chaque cible est suivie ou "pistée" en 801.

Une classification selon la taille des cibles (avions 802, véhicules 803) est effectuée. Elle est basée principalement sur le nombre de plots détectés et la répartition des plots, le tout en liaison avec la base de données "mobiles" 805.

Le calcul du vecteur vitesse de la cible est effectuée en projetant la vitesse radiale de la cible sur le cheminement de celle-ci, issue de la mémoire géographique 815 (piste, taxiway).

Le pistage met en oeuvre une extrapolation de la position de la cible en utilisant le vecteur vitesse instantanée. La position future est prédite avec un filtre de Kalman.

L'élimination des fantômes dus aux effets multitrajets est effectuée au moyen d'un algorithme qui s'appuie sur :

- la connaissance des zones à risque, l'existence de phénomènes multitrajet ; celles-ci sont mémorisées dans la mémoire géographique ;

- la corrélation avec la présence d'autres cibles ; et

- le réalisme de la présence subite d'un plot sur la zone considérée (notion de zones d'apparition de cibles probables).

La fréquence de rafraîchissement de l'information est adaptée selon la zone considérée. En effet, s'il est utile de renouveler l'information à 1 Hz dans les zones où les cibles sont rapides et où elles sont susceptibles d'apparaître pour le radar, il est donc nécessaire de renouveler l'information.

Ce n'est pas le cas lorsque les cibles ont des vitesses faibles.

Il est à remarquer que le balayage électronique n'ayant par définition aucune contrainte-d'inertie, permet avantageusement une adaptation totale du balayage du radar à la zone à balayer.

Enfin, il est prévu un traitement d'exploitation qui regroupe les traitements effectués sur les données issues du pointage. Ceci s'appuie également sur la mémoire géographique.

Il peut être prévu par exemple une fonction anti-collision entre les cibles ou entre les cibles et structures fixes. Cette fonction anti-collision 811 est réalisée en extrapolant les positions et les vitesses de celle-ci à quelques secondes.

A l'issue de la fonction anti-collision, une information de risque de collision est délivrée.

Une fonction intrusion 812 peut être prévue également. Elle concerne la surveillance des zones à risques prédéterminées ainsi que la surveillance périmétrique de l'aire de manoeuvre de l'aéroport.

Avantageusement, une fonction comportement anormal est destinée à avertir l'utilisateur d'une anomalie relative à la trajectoire d'une "piste radar", par exemple un avion sortant de la piste au sol.

Une fonction survol de l'aéroport signale toute piste ou aéronef ayant une trajectoire et une vitesse ne correspondant pas aux zones et cheminements normaux (cas des hélicoptères et des survols à basse altitude).

L'information 820 en sortie du radar se présente sous la forme de plots élémentaires, cibles ou pistes tous munis d'attributs comme la vitesse, la taille, les risque de collision ; ces informations sont numériques et donc disponibles pour des visualisations externes au système.

La nature des informations délivrées permet une fusion de données ultérieures avec des informations provenant d'autres sources. Des fonctions de corrélation telles que l'étiquetage peuvent être ainsi aisément réalisées. Le tout est délivré à un dispositif de communication approprié 830, avec l'homme et/ou avec la machine.

De manière optionnelle, le radar peut être doté d'un processeur graphique et d'une visualisation couleurs. Dans ce cas, l'image radar est calculée dans le processeur graphique et transmise dans un standard vidéo au poste contrôleur.

Les liaisons entre le radar principal et le radar éloigné sont du type liaison série standard et permettent une interconnexion aisée des moyens de communication à distance telle que des faisceaux hertziens par exemple.

On détaillera maintenant les déphaseurs.

Pour réaliser la loi de phase nécessaire, le principe choisi pour les éléments déphaseurs est de commuter des cellules de déphasage de bits et de les associer pour obtenir la valeur souhaitée. Les cellules de déphasage sont des longueurs de lignes de transmission et leur commutation utilise des diodes PIN. Les pertes d'insertion d'un déphaseur sont de l'ordre de 2,5 dB. Ce dispositif est avantageusement réciproque, il travaille à la fois en émission et en réception dans le cas de déphaseurs à diode.

Les principales caractéristiques électriques des éléments déphaseurs sont les suivantes :

- la fréquence de fonctionnement est en bande X ;

- la largeur de bande est de l'ordre de 150 MHz ;

- l'indice en onde stationnaire en émission/réception est de l'ordre de 2 pour 1 au maximum ;

- la puissance admissible est de l'ordre de 3 W crête ;

- les pertes sont de l'ordre de 2,5 dB maximum ;

- le déphasage est de l'ordre de 0-337,5° ;

- le pas élémentaire est de 22,5° ;

- la précision de phase est de 10°RMS ;

- le plan d'établissement est de l'ordre de 10 µs maximum ;

- les commandes de pointage sont numériques par exemple sous des mots binaires de 4 bits ;

- les dimensions sont de l'ordre de 90 x 60 x 13 mm.

Le module déphaseur élémentaire intègre outre le déphaseur lui-même, les registres numériques nécessaires au stockage des valeurs envoyées par le pointeur.

Le calculateur central détermine la valeur de la consigne angulaire en gisement souhaitée à un instant donné.

Cette consigne est décomposée en 96 fonctions élémentaires couvrant l'espace désiré.

A chacune de ces 96 fonctions élémentaires correspondent 96 mots de 12 bits chacun, dont 7 bits d'adresse et 4 bits de données (les 4 bits de données correspondent aux consignes de déphasage) stockées dans une PROM.

Un processeur de gestion commande ensuite un bus spécifique qui alimente les déphaseurs à l'aide d'une petite interface.

L'adresse de chaque déphaseur est connectée par un dispositif accessible à l'extérieur.

Il est à remarquer qu'il n'y a pas nécessairement de calcul sur les pointages.

Le traitement temps réel du radar vise à donner à celui-ci des performances en précision, domaines d'ambiguïté et séparabilité s'approchant des caractéristiques théoriques liées à l'éclairement et à la forme d'onde.

Par exemple le pas de filtrage en échantillonnage distance est de l'ordre de 50 m pour les grandes portes et de l'ordre de 5 m pour les petites portes.

Le pas de filtrage en vitesse est de l'ordre de 3,75 m/s tandis que la largeur du faisceau dans l'axe est de l'ordre de 1,5°.

Avec de telles caractéristiques, les performances sont en distance de l'ordre de 100 à 4500 m environ avec une plage distance non-ambiguë de 0 à 36 km. La levée d'ambiguïté est de l'ordre de +/- 100 m/s avec une plage vitesse non- ambiguë de l'ordre de +/- 14 m/s.

Le nombre de filtres primaires en distance échantillonnée au pas de distance de 50 m pour les 90 grandes portes comprend chacune 16 filtres, en vitesse 8 filtres, en direction 90, soit un total de l'ordre de 1 million de filtres.

Ce million de filtres est calculé deux fois par chaque direction (l'utilisation de deux fréquences de récurrence distinctes est nécessaire pour la levée d'ambiguïté vitesse).

L'analyse de 120° en azimut correspond à 72 directions traitées soit à un temps de rafraîchissement maximal de 0,56 s.

La puissance de calcul est déterminée pour couvrir le cas de plusieurs antennes.

Une variante d'antenne consisterait à utiliser un réflecteur adapté à la formation du lobe en cosécante carrée inversée, muni d'une centaine de sources rayonnantes disposées longitudinalement face à ce réflecteur pour l'alimenter.

En autre variante, l'antenne peut être un pavé rayonnant dans lequel les guides d'onde sont remplacés par une plaque diélectrique sur laquelle sont implantés des pavés imprimés équivalents fonctionnellement aux fentes de l'antenne à guide d'onde.

Les avantages de l'invention peuvent s'expliquer comme suit.

Dans les radars connus pour la surveillance d'aéroports, on cherche à disposer d'une excellente résolution angulaire à l'aide d'un pinceau fin en gisement (0,2 à 0,4° typiquement), avec un balayage mécanique de l'antenne, en gisement. Pour atteindre la résolution voulue sur les cibles, on se base essentiellement sur la résolution en distance. La durée d'impulsion est donc choisie très brève, d'où il résulte la nécessité d'une forte puissance d'émission.

La présente invention part d'une approche radicalement opposée, tout à fait inhabituelle pour ces radars.

La Demanderesse a observé qu'un radar à antenne-réseau, auquel il est possible de donner une ouverture angulaire d'environ 1,5°, peut être utilisé, dans les conditions suivantes:

- en le munissant de voies de réception somme et différence, on obtient la possibilité de localiser une cible dans le faisceau émis, avec une précision allant jusqu'à environ 1/15 de son ouverture angulaire, ce qui est suffisant.
- il reste qu'un tel faisceau a un pouvoir séparateur de base en angle qui est inférieur à celui des radars connus; mais la Demanderesse a également observé que le pouvoir séparateur réel est, dans le radar proposé, fonction de la distance, de l'azimut, et de la vitesse. En améliorant l'utilisation de ces trois paramètres, notamment par augmentation de la fréquence de récurrence, l'invention permet d'accéder à un pouvoir séparateur effectif suffisant pour l'application visée.

En outre, l'usage d'une pluralité de fréquences d'émission en "peigne", éventuellement de plusieurs fréquences de récurrence différentes, permet d'améliorer grandement la précision en distance, qui peut être de l'ordre de 5 mètres, tout en autorisant une largeur d'impulsion d'émission supérieure à celle des radars connus.

Par ailleurs, on tire de nombreux avantages de la modularité du radar proposé. On sait en effet qu'un radar d'aéroport doit être opérationnel en permanence.

Avec les radars classiques, ceci suppose un doublement de tous les équipements, ou presque.

Le radar de la présente invention, par sa modularité, et sa puissance nettement inférieure, est beaucoup moins gourmand en équipements auxiliaires (climatisation ordinaire notamment), et surtout susceptible de fonctionner en mode dégradé sans pertes importantes de performances, dans de nombreux cas de défaillances ponctuelles, notamment celle d'une colonne d'éléments rayonnants, ou des éléments d'émission/réception qui lui sont associés.

Bien que le radar proposé présente des avantages particulièrement marqués dans l'application décrite, il est également susceptible d'autres applications, où se présentent les mêmes problèmes.

## ANNEXE FORMULES

$$E(y) = A(y) \, . \, \exp[j.\,\Phi(y)] \qquad [L1]$$

$$E_r(f) = E_i \, . \, T(f) \qquad [L2]$$

$$\Phi(x) = K(\Theta) \, . \, x \qquad [L3]$$

## Revendications

1. Dispositif radar de surveillance d'une zone du sol, en particulier d'un aéroport, destiné à être disposé selon une relation géométrique prédéterminée par rapport à ladite zone, caractérisé en ce qu'il comprend en combinaison:

   - au moins une antenne fixe (10), définissant un réseau d'éléments rayonnants rangés par colonnes verticales, et associés à un réseau d'éléments déphaseurs (14), les éléments rayonnants des différentes colonnes verticales obéissant tous à la même loi de phase, tandis que le réglage des déphaseurs est susceptible de changer sur commande d'une colonne verticale à la suivante, pour fournir un balayage électronique de l'espace en gisement dans le plan horizontal,

   - une source d'émission (GEN), propre à délivrer un signal hyperfréquence (HF) d'une puissance prédéterminée à au moins une fréquence prédéterminée,

   - des moyens d'émission/réception hyperfréquence (HFA; HFB), avec:

     . au moins un circulateur (20), possédant une entrée (22) reliée à la source d'émission (GEN), une entrée/sortie (24) reliée au réseau d'éléments déphaseurs (14), et une sortie (26),
     . au moins une voie d'émission (VE) propre à véhiculer le signal d'émission (HF) vers le réseau d'éléments déphaseurs (14), par l'entrée du circulateur,

- au moins une voie de réception (VR) propre à véhiculer le signal HF reçu du réseau d'éléments déphaseurs via la sortie (26) du circulateur,

- des moyens (DIR;29) pour subdiviser la voie de réception en un signal somme (VR1) et au moins un signal différence (VR2),

   - un premier et un second éléments récepteurs avec changement de fréquence (REC1 et REC2), recevant respectivement les signaux somme et différence, et fournissant des sorties codées en numérique,

   - des moyens de traitement (40) des signaux numériques issus des premier et second éléments récepteurs (REC1 et REC2), pour la détection radar d'objets dans la zone surveillée, et

   - des moyens de commande (12) du réseau de déphaseurs (14).

2. Dispositif selon la revendication 1, caractérisé en ce que chaque colonne d'éléments rayonnants de l'antenne (10A1-10A16) est associée à un élément déphaseur commandé (14A1-14A16), et en ce que les moyens d'émission/réception hyperfréquence (HFA) comprennent:

   - m distributeurs d'émission/réception (25), qui subdivisent l'antenne en m groupes de n colonnes d'éléments rayonnants (10A-10F), groupes auxquels correspondent m groupes d'éléments déphaseurs (14A-14F),

   - m modules d'émission/réception (17A-17F), ayant chacun une entrée/sortie, reliée à l'un des distributeurs d'émission/réception, une entrée de signal d'émission, et une sortie de réception,

   - des moyens (15) pour relier les entrées d'émission des m modules d'émission/réception à la source d'émission (GEN), et

   - des moyens (28G,28D,29) pour construire un signal somme (VR1) et au moins un signal différence (VR2), à partir des sorties de réception des m modules d'émission/réception.

3. Dispositif selon la revendication 2, caractérisé en ce que chaque module d'émission-réception comprend un amplificateur de puissance à l'état solide pour l'émission.

4. Dispositif selon la revendication 1, caractérisé en ce que chaque colonne d'éléments rayonnants de l'antenne (10A1-10A16) est associée à un élément déphaseur commandé (14A1-14A16), et en ce que les moyens d'émission/réception hyperfréquence (HFB) comprennent:

   - deux distributeurs d'émission/réception (15L, 15R), qui subdivisent l'antenne et les déphaseurs en des moitiés gauche et droite,

   - des moyens (29) pour construire un signal somme (VR1) et au moins un signal différence (VR2) à partir des deux entrées/sorties simples de ces deux distributeurs,

   - un circulateur (20) dont l'entrée/sortie reçoit le signal somme, tandis que son entrée est relié à la source d'émission, et que sa sortie et le signal différence sont respectivement amenés aux premier et second éléments récepteurs.

5. Dispositif selon la revendication 4, caractérisé en ce que la source d'émission comprend un émetteur à tube.

6. Dispositif selon l'une des revendications précédentes, caractérisé en ce que la source d'émission (GEN) comprend un oscillateur hyperfréquence (16), propre à émettre un signal d'une fréquence prédéterminée et d'une largeur de bande prédéterminée, et un synthétiseur de fréquence (21) propre à fournir des signaux locaux, ainsi qu'à coopérer avec l'oscillateur hyperfréquence pour permettre une modulation linéaire discrète de la fréquence d'émission, d'impulsion à impulsion, en agissant en conséquence sur les signaux locaux, ladite modulation linéaire conservant la relation de phase entre les différentes fréquences d'émission.

7. Dispositif selon l'une des revendications précédentes, caractérisé en ce que ladite loi de phase est réalisée par construction des colonnes verticales d'éléments rayonnants.

8. Dispositif selon la revendication 7, caractérisé en ce qu'une colonne d'éléments rayonnants est réalisée par un guide d'onde à fentes rayonnantes, alimenté par une transition guide/coaxial.

9. Dispositif selon l'une des revendications précédentes, caractérisé en ce que les déphaseurs sont du type déphaseur réciproque à diode, commandés numériquement.

10. Dispositif selon l'une des revendications précédentes, caractérisé en ce que chaque élément récepteur comprend au moins un changement de fréquence, suivi d'une démodulation amplitude/phase et d'un codage en numérique, sous forme de signaux complexes.

**11.** Dispositif selon l'une des revendications précédentes, caractérisé en ce que, pour chaque pointage d'antenne, le cycle d'émission comprend l'émission de chacune des différentes fréquences, et ce plusieurs fois.

**12.** Dispositif selon la revendication 11, caractérisé en ce que les fréquences d'émission sont utilisées dans un ordre différent de l'ordre exact de leurs valeurs nominales.

**13.** Dispositif selon l'une des revendications 11 et 12, caractérisé en ce que le cycle est répété pour une valeur différente de la fréquence de récurrence des impulsions d'émission.

**14.** Dispositif selon l'une des revendications précédentes, caractérisé en ce que les moyens de traitement du signal sont du type à compression d'impulsion en distance, par écartométrie monopulse en azimut, et par traitement Doppler en vitesse.

**15.** Dispositif selon la revendication 14, caractérisé en ce que les moyens de traitement comprennent des moyens de transformation de Fourier, pour la compression d'impulsion et/ou l'intégration cohérente.

**16.** Dispositif selon l'une des revendications 14 et 15, caractérisé en ce que les moyens de traitement réalisent:

- la détection et le filtrage de plots radar, à partir des signaux reçus,
- l'écartométrie angulaire,
- un affinage en vitesse, et
- un affinage en distance.

**17.** Dispositif selon la revendication 16, prise en combinaison avec la revendication 13, caractérisé en ce que l'affinage en vitesse est accompagné d'une levée d'ambiguïté en vitesse, utilisant la seconde fréquence de récurrence.

**18.** Dispositif selon l'une des revendications précédentes, caractérisé en ce que le balayage électronique d'antenne est adapté en fonction des objets détectés et des zones à surveiller.

**19.** Dispositif selon l'une des revendications précédentes, caractérisé en ce que le faisceau d'analyse du réseau d'éléments rayonnants présente une ouverture en azimut dans l'axe de l'ordre de 1,5°, pour un angle de balayage en gisement de l'ordre de 150°, avec un lobe en site de type cosécante carrée inversée.

**20.** Installation radar pour la surveillance d'une zone, caractérisée en ce qu'elle comprend:

- au moins un dispositif radar selon l'une des revendications précédentes, et
- des moyens de traitement de données (50) reliés aux moyens de traitement du signal (40) pour la surveillance radar au sol de ladite zone, en fonction de la détection desdits objets.

**21.** Installation selon la revendication 20, caractérisée en ce qu'une partie au moins des moyens de traitement de signal est partagée entre plusieurs dispositifs radar.

**Patentansprüche**

**1.** Radarsystem zur Überwachung einer Bodenzone, inbesondere eines Flughafens, dazu bestimmt, bezüglich dieser Zone einem festgelegten geometrischen Verhältnis entsprechend angeordnet zu werden, dadurch gekennzeichnet, daß es zusammengefaßt enthält:

- wenigstens eine feste Antenne (10), ein Gitter aus Strahlungselementen definierend, in vertikalen Spalten angeordnet und einem Gitter aus Phasenschieberelementen (14) zugeordnet, wobei die Strahlungselemente der verschiedenen vertikalen Spalten alle demselben Phasengesetz gehorchen, während die Einstellung der Phasenschieber sich auf Befehl von einer vertikalen Spalte zu nächsten ändern kann, um eine elektronische Seitenpeilungs-Abtastung des Raums in der horizontalen Ebene zu liefern,
- eine Sendequelle (GEN), fähig ein Höchstfrequenzsignal (HF) einer festgelegten Leistung mit wenigstens einer festgelegten Frequenz zu liefern,
- Höchstfrequenz-Sende-/Empfangseinrichtungen (HFA;HFB) mit:

  . wenigstens einen Zirkulator (20) mit einem Eingang (22), verbunden mit der Sendequelle (GEN), einem Eingang/Ausgang (24), verbunden mit dem Phasenschieberelementegitter (14), und einen Ausgang (26),
  . wenigstens einen Sendekanal (VE), der das Sendesignal (HF) in Richtung Phasenschieberelementegitter (14) leitet, über den Eingang des Zirkulators,
  . wenigstens einen Empfangskanal (VR), der das von dem Phasenschieberelementegitter empfangene Signal HF über den Ausgang (26) des Zirkulators leitet,
  . Einrichtungen (DIR;29), um den Empfangskanal zu unterteilen in ein Summensignal (VR1) und wenigstens ein Differenzsignal (VR2),

- ein erstes und ein zweites Empfangselement mit Frequenzweiche (REC1 und REC2), die jeweils das Summen- und das Differenzsignal empfangen und digital codierte Ausgänge liefern,
- Verarbeitungseinrichtungen (40) der von dem ersten und zweiten Empfangselement (REC1 und REC2) stammenden digitalen Signale zur Radardetektion von Objekten in der überwachten Zone, und
- Steuereinrichtungen (12) des Phasenschiebergitters (14).

2. Vorrichtung nach Anspruch 1, dadurch gekennzeichnet, daß jede Strahlungselementspalte der Antenne (10A1-10A16) verbunden ist mit einem gesteuerten Phasenschieberelement (14A1-14A16), und dadurch, daß die Höchstfrequenz-Sende-/Empfangseinrichtungen (HFA) umfassen:

- m Sende-/Empfangsverteiler (25), die die Antenne unterteilen in m Gruppen von n Strahlungselementespalten (10A-10F), wobei diesen Gruppen m Gruppen von Phasenschieberelementen (14A-14F) entsprechen,
- m Sende-/Empfangsmodule (17A-17F), von denen jeder einen mit einem der Sende-/Empfangsverteiler verbundenen Eingang/Ausgang, einen Sendesignaleingang und einen Empfangsausgang hat,
- Einrichtungen (15) zum Verbinden der Sendeeingänge der m Sende-/Empfangseinrichtungen mit der Sendequelle (GEN), und
- Einrichtungen (28G,28D,29) zum Herstellen eines Summensignals (VR1) und wenigstens eines Differenzsignals (VR2) aus den Empfangsausgängen der m Sende-/Empfangsmodule.

3. Vorrichtung nach Anspruch 2, dadurch gekennzeichnet, daß jeder Sende-/Empfangsmodul zum Senden einen Leistungsverstärker im festen Zustand umfaßt.

4. Vorrichtung nach Anspruch 1, dadurch gekennzeichnet, daß jede Strahlungselementespalte der Antenne (10A1-10A16) einem gesteuerten Phasenschieberelement (14A1-14A16) zugeordnet ist, und dadurch, daß die Höchstfrequenz-Sende-/Empfangseinrichtungen (HFB) umfassen:

- zwei Sende-/Empfangsverteiler (15L,15R), die die Antenne und die Phasenschieber in eine linke und eine rechte Hälfte unterteilen,
- Einrichtungen (29) zum Herstellen eines Summensignals (VR1) und wenigstens eines Differenzsignals (VR2) aus zwei einfachen Eingängen/Ausgängen dieser beiden Verteiler,
- einen Zirkulator (20), dessen Eingang/Ausgang das Summensignal empfängt, während sein Eingang mit der Sendequelle verbunden ist und sein Ausgang und das Differenzsignal jeweils dem ersten und dem zweiten Empfangselement zugeleitet werden.

5. Vorrichtung nach Anspruch 4, dadurch gekennzeichnet, daß die Sendequelle einen Röhrensender umfaßt.

6. Vorrichtung nach einem der vorangehenden Ansprüche, dadurch gekennzeichnet, daß die Sendequelle (GEN) einen Höchstfrequenz-Oszillator (16) umfaßt, fähig ein Signal mit einer festgelegten Frequenz und einer festgelegten Bandbreite zu senden, und ein Frequenzaufbereitungsteil (21), fähig lokale Signale zu liefern sowie zusammenzuwirken mit dem Höchstfrequenz-Oszillator, um eine diskrete Linearmodulation der Sendefrequenz zu ermöglichen, von Impuls zu Impuls, durch entsprechendes Einwirken auf die lokalen Signale, wobei besagte Linearmodulation das Phasenverhältnis zwischen den verschiedenen Sendefrequenzen beibehält.

7. Vorrichtung nach einem der vorangehenden Ansprüche, dadurch gekennzeichnet, daß das genannte Phasengesetz durch die Gestaltung der vertikalen Strahlungselementespalten realisiert wird.

8. Vorrichtung nach Anspruch 7, dadurch gekennzeichnet, daß eine Strahlungselementespalte mittels eines Wellenleiters mit Strahlungsschlitzen hergestellt wird, versorgt durch einen Leiter/Koaxialkabel-übergang.

9. Vorrichtung nach einem der vorangehenden Ansprüche, dadurch gekennzeichnet, daß die Phasenschieber digital gesteuerte Dioden-Wechsel- bzw. -Gegenphasenschieber sind.

10. Vorrichtung nach einem der vorangehenden Ansprüche, dadurch gekennzeichnet, daß jedes Empfangselement wenigstens eine Frequenzweiche umfaßt, gefolgt von einer Amplituden-Phasen-Demodulation und einer Digitalcodierung in Form komplexer Signale.

11. Vorrichtung nach einem der vorangehenden Ansprüche, dadurch gekennzeichnet, daß für jede Antennenausrichtung der Sendezyklus das Senden von jeder der unterschiedlichen Frequenzen umfaßt, und dies mehrmals.

12. Vorrichtung nach Anspruch 11, dadurch gekennzeichnet, daß die Sendefrequenzen in einer anderen Reihenfolge als der genauen Reihenfolge ihrer Nominalwerte benutzt werden.

13. Vorrichtung nach einem der Ansprüche 11 und 12, dadurch gekennzeichnet, daß der Zyklus wiederholt wird für einem anderen bzw. unterschiedlichen Wert der Impulsfolgefrequenz der Sendeimpulse.

14. Vorrichtung nach einem der vorangehenden Ansprüche, dadurch gekennzeichnet, daß die Verarbeitungseinrichtungen des Signals vom Typ Distanzimpulskompression durch azimutale Monopuls-Abstandsmessung und durch Doppler-Geschwindigkeitsverarbeitung sind.

15. Vorrichtung nach Anspruch 14, dadurch gekennzeichnet, daß die Verarbeitungseinrichtungen Fourier-Transformationseinrichtungen für die Impulskompression und/oder die kohärente Integration umfassen.

16. Vorrichtung nach einem der Ansprüche 14 und 15, dadurch gekennzeichnet, daß die Verarbeitungseinrichtungen ausführen:

   - Detektion und Filtrierung der Radarleuchtpunkte aus den empfangenen Signalen,
   - elektronische Winkelabstandsmessung,
   - Geschwindigkeitsverfeinerung bzw. -bereinigung, und
   - Entfernungsverfeinerung bzw. -bereinigung.

17. Vorrichtung nach Anspruch 16, zusammen mit dem Anspruch 13, dadurch gekennzeichnet, daß die Geschwindigkeitsbereinigung begleitet wird von einer Beseitigung der Geschwindigkeitsmehrdeutigkeit, wobei man die zweite Impulsfolgefrequenz benutzt.

18. Vorrichtung nach einem der vorangehenden Ansprüche, dadurch gekennzeichnet, daß das elektronische Antennenabtasten angepaßt ist an die zu detektierenden Objekte und die zu überwachenden Zonen.

19. Vorrichtung nach einem der vorangehenden Ansprüche, dadurch gekennzeichnet, daß das Analyse-Strahlenbündel des Strahlungselementegitters eine azimutale Winkelöffnung in der Achse der Größenordnung 1,5° aufweist, bei einem Seitenpeilungs-Abtastwinkel der Größenordnung 150°, mit einer Strahlungskeule des Typs umgekehrter quadratischer Kosekans.

20. Radaranlage zur Überwachung einer Zone, dadurch gekennzeichnet, daß sie umfaßt:

   - wenigstens einer Radarvorrichtung nach einem der vorangehenden Ansprüche, und

   - Datenverarbeitungseinrichtungen (50) verbunden mit den Signalverarbeitungseinrichtungen (40) zur Radar-Bodenüberwachung der genannten Zone unter Berücksichtigung der Detektion der genannten Objekte.

21. Anlage nach Anspruch 20, dadurch gekennzeichnet, daß wenigstens ein Teil der Signalverarbeitungseinrichtungen von mehreren Radarvorrichtungen geteilt bzw. gemeinsam benützt wird.

**Claims**

1. Radar device for the surveillance of a zone on the ground, in particular of an airport, intended to be laid out according to a predetermined geometrical relationship with respect to the said zone, characterized in that it comprises in combination:

   - at least one fixed antenna (10) defining an array of radiating elements arranged in vertical columns, and associated with an array of phase-shifter elements (14), the radiating elements of the various vertical columns all obeying the same phase law, whilst the setting of the phase shifters is able to change on command from one vertical column to the next, so as to provide electronic scanning of space in bearing in the horizontal plane,
   - a transmission source (GEN), capable of delivering a microwave frequency signal (HF) with a predetermined power at at least one predetermined frequency,
   - microwave frequency transmit/receive means (HFA; HFB), with:

      . at least one circulator (20), possessing an input (22) connected to the transmission source (GEN), an input/output (24) connected to the array of phase-shifter elements (14), and an output (26),
      . at least one transmit channel (VE) capable of conveying the transmission signal (HF) to the array of phase-shifter elements (14), via the input of the circulator,
      . at least one receive channel (VR) capable of conveying the HF signal received from the array of phase-shifter elements via the output (26) of the circulator,
      . means (DIR; 29) for subdividing the receive channel into a sum signal (VR1) and at least one difference signal (VR2),

   - a first and a second receiver element with frequency change (REC1 and REC2) respectively receiving the sum and difference signals and providing numerically coded outputs,

- means (40) for processing the numerical signals from the first and second receiver elements (REC1 and REC2), for the radar detection of objects in the zone under surveillance, and
- means (12) of control of the phase-shifter array (14).

2. Device according to Claim 1, characterized in that each column of radiating elements of the antenna (10A1-10A16) is associated with a controlled phase-shifter element (14A1-14A16), and in that the microwave frequency transmit/receive means (HFA) comprise:

- m transmit/receive distributors (25) which subdivide the antenna into m groups of n columns of radiating elements (10A-10F), to which groups there correspond m groups of phase-shifter elements (14A-14F),
- m transmit/receive modules (17A-17F), each having an input/output, connected to one of the transmit/receive distributors, a transmit signal input, and a receive output,
- means (15) for connecting the transmit inputs of the m transmit/receive modules to the transmit source (GEN), and
- means (28G, 28D, 29) for constructing a sum signal (VR1) and at least one difference signal (VR2), from the receive outputs of the m transmit/receive modules.

3. Device according to Claim 2, characterized in that each transmit-receive module comprises a solid-state power amplifier for transmission.

4. Device according to Claim 1, characterized in that each column of radiating elements of the antenna (10A1-10A16) is associated with a controlled phase-shifter element (14A1-14A16), and in that the microwave frequency transmit/receive means (HFB) comprise:

- two transmit/receive distributors (15L, 15R), which subdivide the antenna and the phase shifters into left and right halves,
- means (29) for constructing a sum signal (VR1) and at least one difference signal (VR2) from the two simple inputs/outputs of these two distributors,
- a circulator (20) whose input/output receives the sum signal, whilst its input is connected to the transmit source, and whilst its output and the difference signal are taken respectively to the first and second receiver elements.

5. Device according to Claim 4, characterized in that the transmit source comprises a tube-based transmitter.

6. Device according to one of the preceding claims, characterized in that the transmit source (GEN) comprises a microwave frequency oscillator (16) capable of transmitting a signal with a predetermined frequency and with a predetermined bandwidth, and a frequency synthesizer (21) capable of providing local signals as well as of cooperating with the microwave frequency oscillator to allow discrete linear modulation of the transmission frequency, from pulse to pulse, by acting accordingly on the local signals, the said linear modulation preserving the phase relationship between the various transmission frequencies.

7. Device according to one of the preceding claims, characterized in that the said phase law is produced by construction of the vertical columns of radiating elements.

8. Device according to Claim 7, characterized in that a column of radiating elements is produced via a waveguide with radiating slots, fed by a guide/coaxial transition.

9. Device according to one of the preceding claims, characterized in that the phase shifters are of the numerically controlled, diode-based reciprocal phase-shifter type.

10. Device according to one of the preceding claims, characterized in that each receiver element comprises at least one frequency change, followed by an amplitude/phase demodulation and by numerical coding, in the form of complex signals.

11. Device according to one of the preceding claims, characterized in that, for each antenna pointing, the transmit cycle comprises the transmission of each of the various frequencies, several times.

12. Device according to Claim 11, characterized in that transmission frequencies are used in an order differing from the precise order of their nominal values.

13. Device according to one of Claims 11 and 12, characterized in that the cycle is repeated for a different value of the repetition frequency of the transmit pulses.

14. Device according to one of the preceding claims, characterized in that the signal processing means are of the type with pulse compression in range, by monopulse deviation measurement in azimuth and by Doppler processing in speed.

15. Device according to Claim 14, characterized in that the processing means comprise Fourier transformation means for the pulse compression and/or coherent integration.

16. Device according to one of Claims 14 and 15, characterized in that the processing means carry out:

   - detection and filtering of radar blips, from signals received,
   - angle deviation measurement,
   - fine-tuning in speed, and
   - fine-tuning in range.

17. Device according to Claim 16, taken in combination with Claim 13, characterized in that the fine-tuning in speed is accompanied by a removal of ambiguity in speed, using the second repetition frequency.

18. Device according to one of the preceding claims, characterized in that the electronic antenna scanning is matched to the objects detected and to the zones to be surveyed.

19. Device according to one of the preceding claims, characterized in that the analysis beam of the radiating element array exhibits an aperture in azimuth along the axis of the order of 1.5°, for an angle of scan in bearing of the order of 150°, with a lobe in elevation of inverse cosecant squared type.

20. Radar installation for the surveillance of a zone, characterized in that it comprises:

   - at least one radar device according to one of the preceding claims, and
   - data processing means (50) connected to the signal processing means (40) for the ground radar surveillance of the said zone, dependant on the detection of the said objects.

21. Installation according to Claim 20, characterized in that a part at least of the signal processing means is shared between several radar devices.

EP 0 629 878 B1

FIG.1

FIG.2

FIG. 3

Ensemble Extérieur — EE

Baie de Traitement — BT

ENSEMBLE DE VISUALISATION OPTIONNEL — EV

FIG.4

FIG.5

FIG.6

EE1

Ensemble
Extérieur 1

EE2

Ensemble
Extérieur 2

EE3

Ensemble
Extérieur 3

BT

Baie de
Traitement

EV

ENSEMBLE DE
VISUALISATION
OPTIONNEL

# FIG.7

PT 1

10-2

10-1

PT 2

# FIG.8

FIG.9

FIG.10 A

FIG.10 B

FIG.13

RADAR PRINCIPAL (RD1)

RADAR ELOIGNE (RD2)

FIG.11

FIG.12

FIG.14

EP 0 629 878 B1

FIG.15

FIG.16

FIG.17

FIG.18

FIG.19

FIG.20

FIG.21

FIG. 22

EP 0 629 878 B1

FIG.23

FIG.24

FIG. 25

a

échantillonnage F = 3 MHz

FR = 30 KHz    ( TR = 33 µs )

b

| Fe₁ TR | Fe₂ TR | Fe₃ TR | | | Fe₁₅ TR | Fe₁₆ TR |

FR Doppler 1875 Hz ( TRD = 533 µs = 16 x 33 µs )

c

| 1 TRD | 2 TRD | 3 TRD | 4 TRD | 5 TRD | 6 TRD | 7 TRD | 8 TRD |

Cycle de traitement   4,3 ms = 8 x 533 µs

d

| FR1 | FR1 + 12% |

NOUVEAU POINTAGE

~ 8 ms

FIG. 26

Plots affinés

805

BASE DE
DONNEES
"MOBILES"

Reconnaissance
AVION/VT

800

801

PISTES VT+AV

PISTAGE

AVIONS | VT

802

803

Plots non
pistables

Analyse des
risques de
COLLISION

Détection
INTRUSIONS

BASE DE
DONNEES
STRUCTURES

811

812

815

820

ELABORATION DU MESSAGE
RADAR

830

DISPOSITIF DE COMMUNICATION

FIG. 27

FIG.28

FIG. 29

FIG.30

FIG. 31

EP 0 629 878 B1